# EUROPEAN PATENT SPECIFICATION

(11) **EP 3 875 986 B1**
(45) Date of publication and mention of the grant of the patent: **28.10.2026**
(21) Application number: 19880063.3
(22) Date of filing: 25.09.2019
(51) Int. Cl.: G01S 7/4865, G01S 7/487, G01S 7/484, G01S 7/497, G01S 17/10, G01V 8/12

(54) **SENSOR DEVICE AND DETECTION METHOD**
SENSORVORRICHTUNG UND DETEKTIONSVERFAHREN
DISPOSITIF DE CAPTEUR ET PROCÉDÉ DE DÉTECTION

(30) Priority: 30.10.2018 JP 2018204154
(43) Date of publication of application: 08.09.2021
(73) Proprietor: OMRON Corporation, Shiokoji-dori, Shimogyo-ku, Kyoto-shi Kyoto 600-8530 (JP)
(72) Inventor: OHNAKA, Shoichi, Kizugawa-shi, Kyoto 619-0283 (JP); IMAI, Kiyoshi, Kizugawa-shi, Kyoto 619-0283 (JP); IIDA, Yusuke, Kizugawa-shi, Kyoto 619-0283 (JP); TSUZUKI, Ryosuke, Kizugawa-shi, Kyoto 619-0283 (JP)
(74) Representative: Emde, Eric
(86) International application number: PCT/JP2019/037443
(87) International publication number: WO 2020/090291

(56) References cited:
- EP-A1- 3 477 340
- WO-A1-2016/204924
- WO-A1-2018/086943
- WO-A1-2019/049480
- DE-A1- 10 025 968
- JP-A- 2000 121 726
- JP-A- 2003 084 074
- JP-A- 2006 078 371
- JP-A- 2008 107 284
- JP-A- 2015 075 453
- JP-A- 2015 215 345
- JP-A- 2018 017 534
- JP-A- 2018 152 823
- JP-A- 2019 082 331
- JP-A- H05 223 928
- US-A1- 2015 102 205

## Description

### BACKGROUND

### Technical Field

The present invention relates to a sensor device and a detection method.

### Related Art

Conventionally, as a photoelectric sensor, there is known a sensor including a light emitting element that iteratively generates detection light, a light receiving element that receives reflected light of the detection light, a binarization processing unit that binarizes a light reception signal, a waveform detecting unit that detects waveform data indicating a change in a binarized light reception signal over time, a waveform integration unit that integrates two or more pieces of waveform data by matching light emitting timings of the light emitting element and generates integrated waveform data, and a workpiece discriminating unit that discriminates presence or absence of a workpiece on the basis of the integrated waveform data (see Japanese Patent Laid-open No. 2015-75453). The photoelectric sensor is capable of sampling reflected light at a high speed and detecting a workpiece, while a circuit size is reduced.

Attention is drawn to EP 3 477 340 A1 proposing a displacement sensor including: an emitting unit periodically emitting pulse signals; a receiving unit receiving reflection signals; a waveform summation unit generating a summation waveform by accumulating temporal waveforms of the binary signals for the respective corresponding periods of time; a distance calculation unit calculating a value that indicates a distance to the object on the basis of waveform features corresponding to waveform features of the pulse signals that appear in the summation waveform; and a reception signal amount calculation unit calculating a reception signal amount that is intensity of the reflection signals received by the receiving unit on the basis of feature amounts indicated by cumulative values that appear in the summation waveform. Further attention is drawn to US 20151102205 A1 relating to a photoelectric sensor that detects a workpiece by measuring light transmission time. A photoelectric sensor includes: a light emitting element which repeatedly generates detection light; a light receiving element which receives reflected light of the detection light; a binarization processing section which binarizes a light receiving signal; a waveform detection section which detects waveform data indicating a temporal change of the binarized light receiving signal; a waveform integration section which matches light emitting timing of the light receiving element to integrate two or more pieces of waveform data and generates integrated waveform data; and a workpiece discrimination section which discriminates presence or absence of a workpiece based on the integrated waveform data, whereby the reflected light is sampled at a high speed while a circuit scale is suppressed, to detect the workpiece.
Attention is also drawn to WO 2016/204924 A1 relating to a system and method which includes a sensor module and a control module for a dispenser. The sensor module has an infrared emitter that emits infrared light and an infrared receiver that detects the infrared light emitted by the infrared emitter and reflected off of a container. The sensor module determines a time period between emission of the infrared light by the infrared emitter and detection of the infrared light by the infrared receiver and determines a distance to the container based on the determined time period. The control module is configured to receive the determined distance from the sensor module, activate the dispenser when the determined distance to the container is less than the predetermined threshold, and deactivate the dispenser when the determined distance to the container is greater than the predetermined threshold.

### SUMMARY

### [Problems to be Solved]

The photoelectric sensor in Japanese Patent Laid-open No. 2015-75453 measures a time from a transmission timing of a transmission signal to a timing when a reflected signal is received, thereby computing a distance to a target object and determining whether or not the target object is located at a desired set distance.

Regarding a set distance, a hysteresis width indicating a difference between an on-point threshold value at which presence of a target object is determined from a state where no target object is detected and an off-point threshold value at which no detection of a target object is determined from a state where a target object is detected, in some cases. For example, with respect to a set distance of 1,000 mm, the on-point threshold value is set to 1,000 mm, the off-point threshold value is set to 990 mm, and the hysteresis width is set to 10 mm.

When a reception signal is binarized and a distance to a target object is computed on the basis of an integration signal obtained by integrating a binarized signal a plurality of times, an integration threshold value is set with respect to the integration signal, and the distance is measured from a time when the integration signal exceeds the integration threshold value.

However, when a target object has a low reflectance, a variation in measured distance is large, and thus a wide hysteresis width needs to be set. On the other hand, when a target object has a high reflectance, a variation in measured distance is small. Hence, when the hysteresis width for the target object having the low reflectance is used, the wide hysteresis width is set, and thus a measured distance is unlikely to exceed the on-point threshold value or the off-point threshold value. Therefore, detection precision of a target object depends on the reflectance of the target object.

In this respect, an object of the present invention is to provide a sensor device and a detection method that enable highly precise detection of a target object irrespective of reflectance of the target object.

### [Means to Solve Problems]

The present invention is provided by the appended claims. The following disclosure serves a better understanding of the present invention. In the following description, any embodiments referred to and not falling within the scope of the appended claims are merely examples useful for the understanding of the invention.

The sensor device according to an aspect of the present invention includes: a light emitting unit that transmits a transmission signal toward a target object; a light receiving unit that receives a reflected signal of the transmission signal and generates a binarized signal; an integration unit that generates waveform data indicating a change in the binarized signal over time and integrates a plurality of pieces of the waveform data to generate integrated waveform data; a distance calculation unit that calculates a first distance value and a second distance value from respective intersections of a first integration threshold value and a second integration threshold value with the integrated waveform data; and a determination unit that determines presence or absence of the target object on a basis of a predetermined distance threshold value and a distance value calculated from the first distance value and the second distance value.

According to the aspect, the first distance value and the second distance value from the respective intersections of the first integration threshold value and the second integration threshold value with the integrated waveform data are calculated, and presence or absence of the target object is determined on the basis of the predetermined distance threshold value and the distance value calculated from the first distance value and the second distance value. Here, when the target object has a high reflectance, the integrated waveform data has a steep inclination, and thus a width between the first distance value and the second distance value is relatively narrow, even when a difference between the first integration threshold value and the second integration threshold value is constant. On the other hand, when the target object has a low reflectance, the integrated waveform data has a gentle inclination, and thus the width between the first distance value and the second distance value is relatively wide, even when the difference between the first integration threshold value and the second integration threshold value is constant. Hence, the first distance value and the second distance value from the respective intersections of the first integration threshold value and the second integration threshold value with the integrated waveform data are calculated, and thereby the width between the first distance value and the second distance value can be changed depending on the reflectance. Consequently, presence or absence of the target object is determined on the basis of the predetermined distance threshold value and the distance value calculated from the first distance value and the second distance value, and thereby detection of the target object can be performed with high precision irrespective of the reflectance of the target object.

In the above-described aspect, the determination unit may determine presence or absence of the target object on a basis of the distance value, the predetermined distance threshold value and a hysteresis value based on an absolute value of a difference between the first distance value and the second distance value, when a previous determination result indicates presence of the target object.

According to the aspect, when the previous determination result indicates the presence of the target object, presence or absence of the target object is determined on the basis of the distance value, the predetermined distance threshold value and the hysteresis value based on the absolute value of the difference between the first distance value and the second distance value. For example, the distance value calculated from the first distance value and the second distance value is compared to a sum of the predetermined distance threshold value and the hysteresis value, and thereby it is possible to have a width (margin) in determination by the hysteresis value, and it is possible to inhibit too sensitive reaction to a change in distance value calculated from the first distance value and the second distance value in determination performed after the determination of the presence of the target object.

In the above-described aspect, the distance calculation unit may calculate the first distance value and the second distance value by performing sub-pixel processing using data obtained immediately in front of and immediately behind the respective intersections of the first integration threshold value and the second integration threshold value with the integrated waveform data.

According to the aspect, the first distance value and the second distance value are calculated by performing the sub-pixel processing using the data obtained immediately in front of and immediately behind the respective intersections of the first integration threshold value and the second integration threshold value with the integrated waveform data. For example, it is possible to calculate a distance with resolution of one or more stages of delay elements. Consequently, measurement precision of a distance to a periphery of the target object can be improved.

In the above-described aspect, the integration unit may include a first integration unit that performs sampling of the binarized signal at a predetermined cycle to generate first waveform data and integrates the first waveform data for a plurality of times of transmission of the transmission signal to generate first integrated waveform data, a timing determination unit that determines a reference timing based on a position of a characteristic point appearing on the first integrated waveform data due to the presence of the target object and generates a stop signal on a basis of the reference timing, and a second integration unit that includes a delay circuit unit, the delay circuit unit including a plurality of delay elements connected to each other in series, in which second waveform data is generated by causing each of the delay elements to incorporate the binarized signal in response to the stop signal, and second integrated waveform data is generated by integrating the second waveform data a plurality of times at a predetermined cycle. The distance calculation unit may calculate the first distance value and the second distance value from the respective intersections of the first integration threshold value and the second integration threshold value with the second integrated waveform data.

According to the aspect, the reference timing is determined based on the position of the characteristic point appearing on the first integrated waveform data due to the presence of the target object, and the stop signal is generated on a basis of the reference timing. In addition, the second waveform data is generated by causing each of the delay elements to incorporate the binarized signal in response to the stop signal, and the second integrated waveform data is generated by integrating the second waveform data a plurality of times at the predetermined cycle. In this manner, a signal is generated from a periphery of a measurement point, based on the characteristic point appearing due to the presence of the target object, and thereby a time taken to the periphery of the target object can be measured with high precision. Hence, the measurement precision of the distance to the periphery of the target object can be improved without increasing a circuit size, and a range of a detectable distance can be widened.

In the above-described aspect, the second integration unit may include a plurality of the delay circuit units connected to each other in parallel and may integrate the second integrated waveform data generated by each of the delay circuit units.

According to the aspect, the second integrated waveform data generated by each of the delay circuit units integrate is integrated. Hence, compared to a case where the delay circuit units are provided in a single line, the number of times of sampling performed in the same time can be more increased. Consequently, the sensor device can be suitable for a high-speed output.

In the above-described aspect, the first integration unit may have a nanosecond-order resolution, and the delay circuit unit may have a picosecond-order resolution.

According to the aspect, the first integration unit has the nanosecond-order resolution, and the delay circuit unit has the picosecond-order resolution. Hence, the measurement precision of the distance to a periphery of the target object can be improved.

The detection method according to another aspect of the present invention is a method for detecting a target object and includes: a signal transmission step of transmitting a transmission signal toward the target object; a signal reception step of receiving a reflected signal of the transmission signal and generating a binarized signal; an integration step of generating waveform data indicating a change in the binarized signal over time and integrating a plurality of pieces of the waveform data to generate integrated waveform data; a distance calculation step of calculating a first distance value and a second distance value from respective intersections of a first integration threshold value and a second integration threshold value with the integrated waveform data; and a determination step of determining presence or absence of the target object on a basis of a predetermined distance threshold value and a distance value calculated from the first distance value and the second distance value.

According to the aspect, the first distance value and the second distance value are calculated from the respective intersections of the first integration threshold value and the second integration threshold value with the integrated waveform data are calculated, and presence or absence of the target object is determined on the basis of the predetermined distance threshold value and the distance value calculated from the first distance value and the second distance value. Here, when the target object has the high reflectance, the integrated waveform data has a steep inclination, and thus a width between the first distance value and the second distance value is relatively narrow, even when a difference between the first integration threshold value and the second integration threshold value is constant. On the other hand, when the target object has the low reflectance, the integrated waveform data has a gentle inclination, and thus the width between the first distance value and the second distance value is relatively wide, even when the difference between the first integration threshold value and the second integration threshold value is constant. Hence, the first distance value and the second distance value from the respective intersections of the first integration threshold value and the second integration threshold value with the integrated waveform data are calculated, and thereby the width between the first distance value and the second distance value can be changed depending on the reflectance. Consequently, presence or absence of the target object is determined on the basis of the predetermined distance threshold value and the distance value calculated from the first distance value and the second distance value, and thereby detection of the target object can be performed with high precision irrespective of the reflectance of the target object.

In the above-described aspect, the determination step may include determining presence or absence of the target object, on a basis of the distance value, the predetermined distance threshold value and a hysteresis value based on an absolute value of a difference between the first distance value and the second distance value, when a previous determination result indicates presence of the target object.

According to the aspect, when the previous determination result indicates the presence of the target object, presence or absence of the target object is determined on the basis of the distance value, the predetermined distance threshold value and the hysteresis value based on the absolute value of the difference between the first distance value and the second distance value. For example, the distance value calculated from the first distance value and the second distance value is compared to a sum of the predetermined distance threshold value and the hysteresis value, and thereby it is possible to have a width (margin) in determination by the hysteresis value, and it is possible to inhibit too sensitive reaction to a change in distance value calculated from the first distance value and the second distance value in determination performed after the determination of the presence of the target object.

In the above-described aspect, the distance calculation step may include calculating the first distance value and the second distance value by performing sub-pixel processing using data obtained immediately in front of and immediately behind the respective intersections of the first integration threshold value and the second integration threshold value with the integrated waveform data.

According to the aspect, the first distance value and the second distance value are calculated by performing the sub-pixel processing using the data obtained immediately in front of and immediately behind the respective intersections of the first integration threshold value and the second integration threshold value with the integrated waveform data. For example, it is possible to calculate a distance with resolution of one or more stages of delay elements. Consequently, measurement precision of a distance to a periphery of the target object can be improved.

In the above-described aspect, the integration step may include a first integration step of sampling the binarized signal at a predetermined cycle to generate first waveform data and integrating the first waveform data for a plurality of times of transmission of the transmission signal to generate first integrated waveform data, a timing determination step of determining a reference timing based on a position of a characteristic point appearing on the first integrated waveform data due to the presence of the target object and generating a stop signal on a basis of the reference timing, and a second integration step of generating, in a delay circuit unit including a plurality of delay elements connected to each other in series, second waveform data by causing each of the delay elements to incorporate the binarized signal in response to the stop signal and generating second integrated waveform data by integrating the second waveform data a plurality of times at a predetermined cycle. The distance calculation step may include calculating the first distance value and the second distance value from the respective intersections of the first integration threshold value and the second integration threshold value with the second integrated waveform data.

According to the aspect, the reference timing is determined based on the position of the characteristic point appearing on the first integrated waveform data due to the presence of the target object, and the stop signal is generated on a basis of the reference timing. In addition, the second waveform data is generated by causing each of the delay elements to incorporate the binarized signal in response to the stop signal, and the second integrated waveform data is generated by integrating the second waveform data a plurality of times at the predetermined cycle. In this manner, a signal is generated from a periphery of a measurement point, based on the characteristic point appearing due to the presence of the target object, and thereby a time taken to the periphery of the target object can be measured with high precision. Hence, the measurement precision of the distance to the periphery of the target object can be improved without increasing a circuit size, and a range of a detectable distance can be widened.

In the above-described aspect, the second integration step may include integrating, in a plurality of the delay circuit units connected to each other in parallel, the second integrated waveform data generated by each of the delay circuit units.

According to the aspect, the second integrated waveform data generated by each of the delay circuit units integrate is integrated. Hence, compared to a case where the delay circuit units are provided in a single line, the number of times of sampling performed in the same time can be more increased. Consequently, the sensor device can be suitable for a high-speed output.

In the above-described aspect, the first integration step may be executed with a nanosecond-order resolution, and the delay circuit unit may have a picosecond-order resolution.

According to the aspect, the first integration unit has the nanosecond-order resolution, and the delay circuit unit has the picosecond-order resolution. Hence, the measurement precision of the distance to a periphery of the target object can be improved.

### [Effect]

According to the present invention, it is possible to provide a sensor device and a detection method that enable highly precise detection of a target object irrespective of reflectance of the target object.

### BRIEF DESCRIPTION OF THE DRAWINGS

FIG. 1 is a block diagram illustrating a configuration of a sensor device according to an embodiment.
FIG. 2 is a schematic diagram illustrating a detection principle of the sensor device illustrated in FIG. 1.
FIG. 3 is a block diagram illustrating a configuration of a TDC delay line measurement unit and a periphery thereof illustrated in FIG. 1.
FIG. 4 is a block diagram illustrating a configuration of a counter measurement unit illustrated in FIG. 1.
FIG. 5 is a timing graph illustrating an operation of the counter measurement unit and a periphery thereof illustrated in FIG. 1.
FIG. 6 is a timing graph illustrating an operation of a rough measurement of the counter measurement unit illustrated in FIG. 1.
FIG. 7 is a timing graph illustrating an overview of an operation of the TDC delay line measurement unit and a periphery thereof illustrated in FIG. 1.
FIG. 8 is a waveform graph illustrating a processing result of a waveform integration unit and a periphery thereof illustrated in FIG. 1, when the target object has a relatively low reflectance.
FIG. 9 is a waveform graph illustrating a processing result of the waveform integration unit and the periphery thereof illustrated in FIG. 1, when the target object has a relatively high reflectance.
FIG. 10 is a waveform graph illustrating a processing result of a stage number calculation unit and a periphery thereof illustrated in FIG. 1, when the target object has a relatively high reflectance.
FIG. 11 is a partially enlarged graph illustrating the vicinity of an intersection of an integration signal with a high threshold value illustrated in FIG. 10.
FIG. 12 is a flowchart illustrating a schematic operation of the sensor device according to the embodiment.
FIG. 13 is a flowchart illustrating determination processing illustrated in FIG. 12.

### DESCRIPTION OF THE EMBODIMENTS

Preferred embodiments of the present invention are described with reference to the accompanying drawings. Moreover, in the drawings, components assigned with the same reference sign have the same or similar configuration.

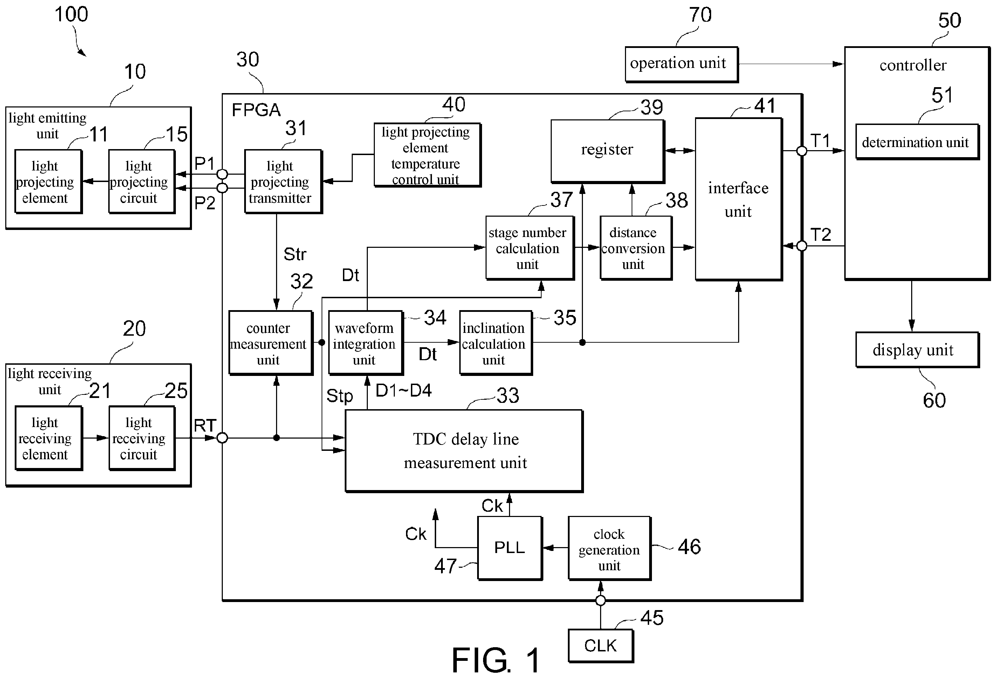

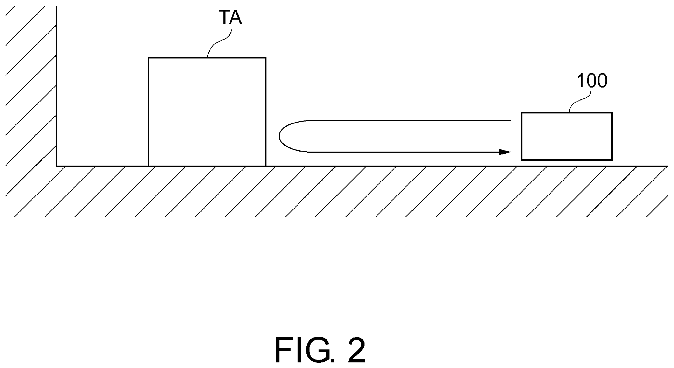

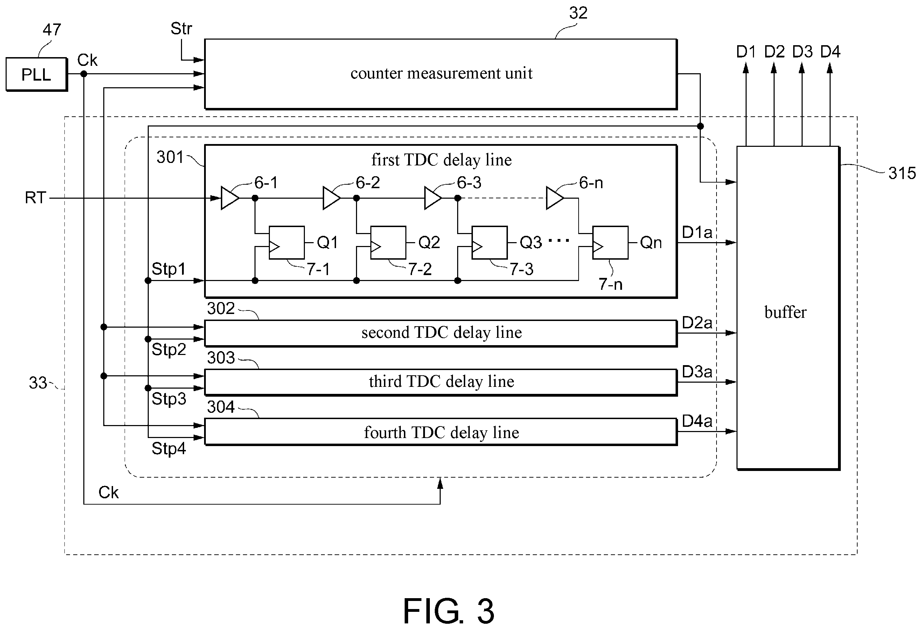

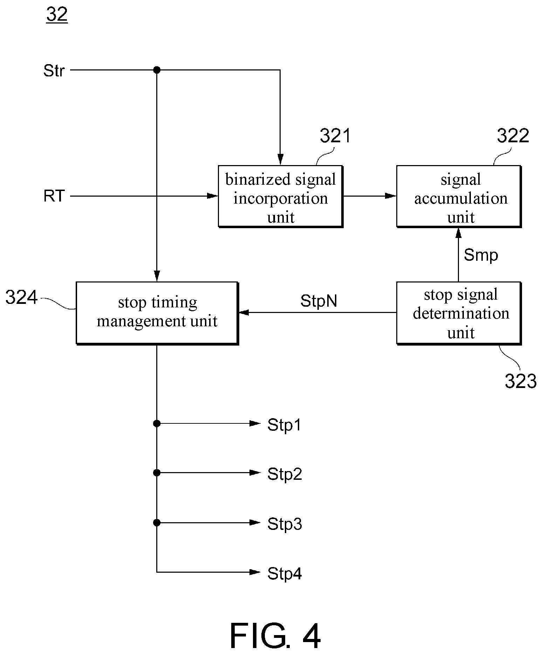

First, with reference to FIGS. 1 to 4, an example of a configuration of a sensor device according to this embodiment is described. FIG. 1 is a block diagram illustrating a configuration of a sensor device 100 according to an embodiment. FIG. 2 is a schematic diagram illustrating a detection principle of the sensor device 100 illustrated in FIG. 1. FIG. 3 is a block diagram illustrating a configuration of a TDC delay line measurement unit 33 and a periphery thereof illustrated in FIG. 1. FIG. 4 is a block diagram illustrating a configuration of a counter measurement unit 32 illustrated in FIG. 1.

As illustrated in FIG. 1, the sensor device 100 includes a light emitting unit 10, a light receiving unit 20, a field-programmable gate array (FPGA) 30, a CLK 45, a controller 50, a display unit 60, and an operation unit 70. For example, the sensor device 100 is a photoelectric sensor and is used for detecting a target object.

As illustrated in FIG. 2, the sensor device 100 emits detection light toward a target object TA. The detection light reflected from the target object TA returns to the sensor device 100 to be received. The received detection light is subjected to signal processing in the sensor device 100, and thereby the sensor device 100 can precisely measure a distance to the target object TA on the basis of a time taken from light projection to light reception. As a result, the target object TA located at a predetermined distance (position) from the sensor device 100 can be detected. Moreover, in addition to the example illustrated in FIG. 2, a case where the target object TA flowing on a line in a factory is detected from above is also conceivable. Besides, in addition to the light, an electromagnetic wave, a sound wave, or the like is also conceivable to be output toward the target object TA from the sensor device 100.

Returning to the description of FIG. 1, the light emitting unit 10 is configured to emit the detection light toward the target object TA. The light emitting unit 10 has a light projecting element 11 and a light projecting circuit 15. The light projecting element 11 iteratively emits detection light toward the target object TA illustrated in FIG. 2. Hereinafter, an example in which the detection light is emitted cyclically is described; however, the detection light may be randomly emitted. For example, the light projecting element 11 is configured to have a laser diode (LD), and the detection light is pulsed light. A pulse control signal P1 and a power control signal P2 of the light projecting element 11 are input to the light projecting circuit 15 from the FPGA 30, and the light projecting circuit 15 controls detection light emitted from the light projecting element 11 on the basis of the pulse control signal P1 and the power control signal P2.

The light receiving unit 20 is configured to receive reflected light of the detection light and generate a binarized signal RT. The light receiving unit 20 has a light receiving element 21 and a light receiving circuit 25. The light receiving element 21 receives the detection light reflected from the target object TA illustrated in FIG. 2 and outputs a light reception signal. For example, the light receiving element 21 is configured to have an avalanche photo diode (APD). The light receiving circuit 25 compares a light reception amount of the light reception signal input from the light receiving element 21 to a predetermined threshold value to perform binarization and generates the binarized signal RT. The light receiving circuit 25 outputs the generated binarized signal RT.

The FPGA 30 includes a light projecting oscillator 31, a counter measurement unit 32, a time-to-digital converter (TDC) delay line measurement unit 33, a waveform integration unit 34, an inclination integration unit 35, a stage number calculation unit 37, a distance conversion unit 38, a register 39, a light projecting element temperature control unit 40, an interface unit 41, a clock generation unit 46, and a phase locked loop (PLL) 47. The FPGA 30 can also be replaced with an integrated circuit such as an application specific integrated circuit (ASIC).

For example, the CLK 45 outputs an oscillation signal of 20 MHz to the clock generation unit 46. The oscillation signal is input to the clock generation unit 46, and the clock generation unit 46 generates and outputs a reference clock on the basis of the oscillation signal. The reference clock is input to the PLL 47, and the PLL 47 generates and outputs a clock signal Ck phase-synchronized with a desired frequency on the basis of the reference clock. The clock signal Ck is supplied to components of the FPGA 30.

An output signal is input to the light projecting oscillator 31 from the light projecting element temperature control unit 40. The light projecting oscillator 31 generates and outputs the pulse control signal P1 and the power control signal P2 and to the light projecting circuit 15 described above, on the basis of the output signal. The light projecting element temperature control unit 40 is to control light projecting power of the detection light emitted from the light emitting unit 10, based on temperature information of the light projecting element 11. In addition, the light projecting oscillator 31 synchronizes a start signal Str for starting counting in the counter measurement unit 32 with the pulse control signal P1 to output the synchronized pulse control signal to the counter measurement unit 32.

The binarized signal RT and a start signal St are input to the counter measurement unit 32. The counter measurement unit 32 generates a stop signal Stp corresponding to a characteristic point of the binarized signal RT and outputs the generated stop signal Stp. The counter measurement unit 32 will be described below in detail.

The binarized signal RT and the stop signal Stp are input to the TDC delay line measurement unit 33. The TDC delay line measurement unit 33 generates delay line output signals D1 to D4 and outputs the generated delay line output signals D1 to D4 to the waveform integration unit 34. In the TDC delay line measurement unit 33 differs from a TDC that measures a time point of a stop pulse which is delayed from a start pulse to arrive, that is, a single hit TDC using a delay line.

The waveform integration unit 34 integrates the delay line output signals D1 to D4 input from the TDC delay line measurement unit 33 a plurality of times and generates an integration signal Dt. The waveform integration unit 34 outputs the generated integration signal Dt to the inclination calculation unit 35 and the stage number calculation unit 37.

The inclination calculation unit 35 calculates an inclination of the integration signal Dt input from the waveform integration unit 34. For example, the inclination calculation unit 35 calculates an amplitude of the integration signal Dt, that is, a high value from an intersection of the integration signal Dt with a predetermined high threshold value for inclination with respect to times of integration. Similarly, the inclination calculation unit 35 calculates a low value from an intersection of the integration signal Dt with a predetermined low threshold value for inclination with respect to times of integration of the integration signal Dt. Besides, an inclination α calculated by the inclination calculation unit 35 is expressed as in Expression (1) below using the above values. 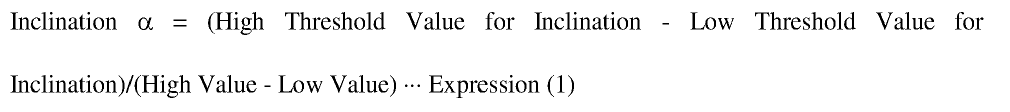 Inclination α = (High Threshold Value for Inclination - Low Threshold Value for Inclination)/(High Value - Low Value) Expression (1)

The inclination calculation unit 35 outputs the calculated inclination to the register 39 via the interface unit 41.

The stage number calculation unit 37 calculates the number of stages of delay circuits included in the TDC delay line measurement unit 33 on the basis of the integration signal Dt input from the waveform integration unit 34. The delay circuits of the TDC delay line measurement unit 33 will be described below. The stage number calculation unit 37 outputs the calculated number of stages of the delay circuits to the distance conversion unit 38.

The distance conversion unit 38 converts the number of stages of the delay circuits which is input from the stage number calculation unit 37 into a distance from the sensor device 100 and outputs the converted distance.

The inclination calculated by the inclination calculation unit 35 and the distance converted by the distance conversion unit 38 are input to the register 39, and the register 39 stores the inclination and the distance.

The interface unit 41 outputs, to the controller 50, the inclination calculated by the inclination calculation unit 35 and an output result of the distance conversion unit 38 which are stored in the register 39, as a measured signal T1.

The controller 50 is configured to control the display unit 60 and the operation unit 70. For example, the controller 50 obtains a light reception amount from the inclination of the integration signal Dt on the basis of the measured signal T1 input from the interface unit 41, and outputs the obtained light reception amount to the display unit 60. In addition, the controller 50 generates setting data T2 corresponding to information input by a user operation of the operation unit 70 and outputs the generated setting data T2 to the interface unit 41. For example, the controller 50 is configured to have a microprocessor such as a central processing unit (CPU), memories such as a read only memory (ROM) and a random access memory (RAM), and a buffering storage device such as a buffer.

In addition, the controller 50 includes a determination unit 51 as a functional configuration of the controller. The determination unit 51 determines presence or absence of the target object TA at a predetermined distance as illustrated in FIG. 2, that is, presence or absence of the target object TA, on the basis of the output result of the distance conversion unit 38 which is included in the measured signal T1 input from the interface unit 41. The controller 50 outputs a determination result to the display unit 60.

The display unit 60 is to output information. The display unit 60 displays the light reception amount input from the controller 50. In addition, the display unit 60 displays the presence or absence of the target object TA on the basis of the detection result input from the controller 50. For example, the display unit 60 is configured to have an indicating lamp such as a lamp or a light emitting diode (LED) and a display such as an organic electro-luminescence display (OLED).

The operation unit 70 is to input information. The operation unit 70 outputs a signal corresponding to a user operation to the controller 50. For example, the operation unit 70 is configured to have a plurality of buttons.

As illustrated in FIG. 3, the counter measurement unit 32 starts counting of the binarized signals RT in response to the start signal St. The counting of the binarized signals RT is performed based on the clock signal Ck input from the PLL 47. In addition, the counter measurement unit 32 generates stop signals Stp1, Stp2, Stp3, and Stp4 (hereinafter, collectively referred to as the "stop signals Stp") corresponding to a characteristic point of the binarized signal RT and outputs the stop signals to the TDC delay line measurement unit 33.

The TDC delay line measurement unit 33 has a first TDC delay line 301, a second TDC delay line 302, a third TDC delay line 303, a fourth TDC delay line 304, and a buffer 315. Moreover, FIG. 3 illustrates an example in which the TDC delay line measurement unit 33 is configured of four TDC delay lines; however, the configuration of the TDC delay line measurement unit is not limited thereto. The TDC delay line measurement unit 33 may have an increase or a decrease in TDC delay lines, depending on a size of logic capacity.

The first TDC delay line 301 has delay elements 6-1, 6-2, 6-3, ···, and 6-n (n is a positive integer) (hereinafter, collectively referred to as the "delay element 6") and flip-flop circuits 7-1, 7-2, 7-3, ···, and 7-n (hereinafter, collectively referred to as the "flip-flop circuit 7"). The delay element 6 is configured to have, for example, an inverter, that is a NOT gate. The flip-flop circuit 7 is configured to have, for example, D flip-flop, and the D flip-flop can also be replaced with a latch circuit or the like. The delay element 6 causes delay to occur by using a rise due to high-speed computing carry of a logic element (LE). Hence, in the FPGA 30, the delay element 6 having the picosecond-order resolution is realized. In addition, the delay element 6 in the FPGA 30 can also be realized by using a delay between a clock input and a Q input of the D flip-flop. In this case, a stable delay time of nanosecond order can be obtained.

The delay element 6-1 delays the input binarized signal RT for a constant time and then outputs the delayed signal to the delay element 6-2 and the flip-flop circuit 7-1. The flip-flop circuit 7-1 outputs an input from the delay element 6-1, at a timing when the stop signal Stp1 is input. The delay element 6-2 delays the input from the delay element 6-1 for a constant time and then inputs an obtained signal to the delay element 6-3 and the flip-flop circuit 7-2. The flip-flop circuit 7-2 outputs an input from the delay element 6-2, at a timing when the stop signal Stp1 is input. Hereinafter, this is true of the rest delay elements from the delay element 6-3 and the rest flip-flop circuits from the flip-flop circuit 7-3, and thus the description thereof is omitted.

The first TDC delay line 301 combines delay signals Q1, Q2, Q3, ···, and Qn (hereinafter, collectively referred to as the "delay signal Q") which are subjected to synchronization to be output from the flip-flop circuits 7-1, 7-2, 7-3, ···, and 7-n and outputs a delay line output signal D1j (j is an integer from 1 to m, and m is a positive integer). The delay line output signal D1j is waveform data of the binarized signal RT having a time length equivalent to a total delay time of the delay elements 6-1, 6-2, 6-3, ···, and 6-n.

The delay line output signal D1j is output to the buffer 315, and then the first TDC delay line 301 is reset primarily. Then, the delay line output signal D1j is re-generated from the next binarized signal RT. The delay line output signals D1j are generated until integration thereof is performed predetermined times such as m times (j = m), and the delay line output signals are accumulated in the buffer 315. The buffer 315 outputs the delay line output signal D1 obtained by integrating the delay line output signal D1j m times. This is true of the delay line output signals D2 to D4 of the TDC delay lines 302 to 304, and thus the description thereof is omitted. In addition, the TDC delay lines 302 to 304 have the same circuit configuration as the TDC delay line 301 has, and thus the illustration and the description thereof are omitted. The TDC delay lines 301 to 304 are each driven by the clock signal Ck input from the PLL 47.

A delay width of the delay elements 6 included in the TDC delay lines 301 to 304 changes depending on an ambient temperature. Therefore, when a distance from the sensor device 100 to the target object TA is calculated on the basis of the delay width, the calculated distance fluctuates in association with the temperature. In order to compensate for fluctuations of the number of delay stages due to the temperature, the TDC delay line measurement unit 33 may further have a temperature compensating TDC delay line. In this case, the temperature compensating TDC delay line outputs a signal indicating the number of delay stages in association with the temperature to the distance conversion unit 38 described above, for example, and the distance conversion unit 38 performs temperature-compensating for the number of stages of the delay circuits which is input from the stage number calculation unit 37 by using the corresponding signal. Besides, the distance conversion unit 38 converts the temperature-compensated number of stages of delay elements to a distance. Hence, it is possible to compensate for the fluctuation (variation) in the measurement result due to the ambient temperature.

As illustrated in FIG. 4, the counter measurement unit 32 includes a binarized signal incorporation unit 321, a signal accumulation unit 322, a stop signal determination unit 323, and a stop timing management unit 324. The binarized signal incorporation unit 321 incorporates the binarized signal RT on the basis of a timing of the start signal Str. The signal accumulation unit 322 accumulates the incorporated binarized signals RT. In the signal accumulation unit 322, measuring results obtained by n measurement cycles are integrated in rough measurement by a clock base to be described below. The stop signal determination unit 323 outputs a sampling signal Smp based on the clock signal to the signal accumulation unit 322 that accumulates the binarized signals RT.

The stop signal determination unit 323 confirms a rising point in integrated value of the binarized signals RT which first intersects with a determination threshold value, as a measurement point, and the stop signal determination unit outputs a stop signal StpN at the rising point. Moreover, the measurement point is not limited to the rising time point and may be a falling start point or another characteristic point. The stop timing management unit 324 receives the stop signal StpN to simultaneously output the stop signals Stp1, Stp2, Stp3, and Stp4 to the TDC delay lines 301 to 304, respectively, every predetermined times, for example, every 128 times of the clock cycle on the basis of a timing of the start signal Str. The stop timing management unit 324 is configured to have a register for compensating for a time difference due to a difference in length of wiring through which the stop signals Stp1, Stp2, Stp3, and Stp4 are output. A use of the register can inhibit fluctuation (variation) of time measurement value due to the wiring length.

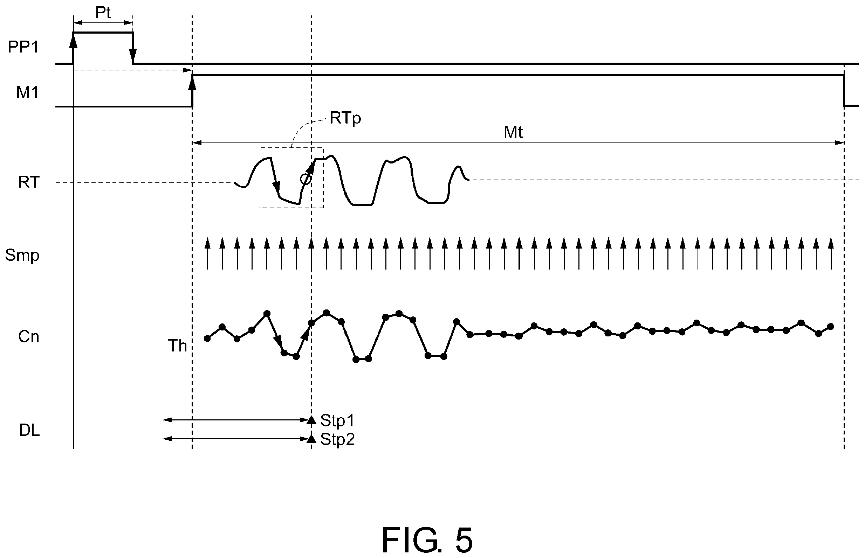

Next, with reference to FIG. 5, an example of an operation of the counter measurement unit and a periphery thereof according to the embodiment is described. FIG. 5 is a timing graph illustrating an operation of the counter measurement unit 32 and a periphery thereof illustrated in FIG. 1.

First, the sensor device 100 roughly measures a time elapsing from a start of light emission, by a counter method in which the clock signal is used, over an entire measurement range of the sensor device 100. The rough measurement is performed with the nanosecond-order resolution. Then, a periphery of the measurement point estimated in the rough measurement is finely measured by a TDC delay line method. Specifically, a stop signal of fine measurement on the periphery of the measurement point searched in the rough measurement is output, and thereby a time to the periphery of the target object TA can be measured with high precision. The fine measurement is performed with the picosecond-order resolution.

### <Rough Measurement>

As illustrated in FIG. 5, first, the light projecting element 11 emits a projection pulse PP1 having a pulse width Pt. A constant period Mt from emission of the light projecting pulse PP1 is set to a measurement section M1 of the projection pulse PP1. The counter measurement unit 32 performs sampling of binarized information of the binarized signal RT with the sampling signal Smp based on the clock signal, within the measurement section M1. The binarized information is subjected to the sampling on the basis of the clock signal and thus is associated with time information. The binarized signal RT is, for example, a signal obtained by inputting a signal from the light receiving element 21 by low voltage differential signaling (LVDS). A partial waveform RTp of the binarized signal RT represents a reflected wave corresponding to the projection pulse PP1.

A counter integration signal Cn is a signal obtained by measuring the binarized information of the binarized signal RT with the sampling signal Smp to the predetermined number of times (n times) of integration and integrating the binarized information obtained by n times of integration for each clock. The counter measurement unit 32 confirms a rising point of the counter integration signal Cn which first intersects with a determination threshold value Th, as a measurement point, and the counter measurement unit outputs a stop signal at the rising point. However, confirmation of the measurement point is described as an example, and another characteristic point such as a falling start point may be confirmed, instead of the rising point. In the rough measurement, a search for a new waveform is performed from an old waveform in time series, and a characteristic point of the binarized signal RT is found. Moreover, it is also possible to search for the old waveform from the new waveform in time series and to find a characteristic point of the binarized signal RT.

### <Fine Measurement>

The TDC delay line measurement unit 33 performs fine measurement of a time immediately before the stop signal on the basis of the above-described stop signal obtained in the rough measurement. The TDC delay lines 301, 302, 303, and 304 receive the stop signals Stp1, Stp2, Stp3, and Stp4 and perform fine measurement on the periphery of the measurement point in delay line measurement DL. A stop timing of the fine measurement on the periphery of the measurement point searched in the rough measurement is applied, and thereby the time to the periphery of the target object TA can be measured with high precision. Hence, the measurement precision of the distance to the periphery of the target object TA can be improved without increasing a circuit size, and the range of a detectable distance can be widened.

In the fine measurement, an integration result of the binarized signal RT acquired from delay lines is subjected to a filtering process, and then a search for an old waveform from a new waveform in time is performed. Hence, it is possible to search for a measurement point at a point having as high a signal level as possible, and it is possible to reduce an effect of noise such as external light as much as possible. Moreover, it is also possible to search for the new waveform from the old waveform in time series in the fine measurement.

In addition, the binarized signals RT are acquired at a plurality of delay lines connected to each other in parallel, and thereby the number of times of sampling performed in the same time can be more increased, compared to a case of a single row of delay lines. Consequently, the sensor device 100 can be suitable for a high-speed output.

In addition, the following processes are performed together, and thereby the sensor device 100 can operate with a rapid sensor response and stable measurement.

In the first measurement, it is possible to measure a distance to the target object TA by using results of the rough measurement and the fine measurement by a user operation. Hence, it is possible to increase an output response speed of the sensor device 100.

After a target object is not spotted, and an error of insufficient light quantity occurs, in a case or the like of measuring the target object flowing on a line in a factory, a state where the target object is present again is encountered, in some cases. In this case, the fine measurement is performed using the result of the previous rough measurement, and thereby it is possible to increase the output response speed of the sensor device 100.

In addition, when a light quantity is insufficient in the rough measurement, the fine measurement can be performed on the basis of a result of the previous rough measurement. In addition, a measurement error is not set to occur when a light quantity is insufficient in the rough measurement, and only a fine measurement error can be set as the measurement error.

In addition, an amplitude reference value of the integrated waveform for determining light quantity insufficiency in the rough measurement and the fine measurement can be determined on the basis of an amplitude of an integrated waveform set by a user operation.

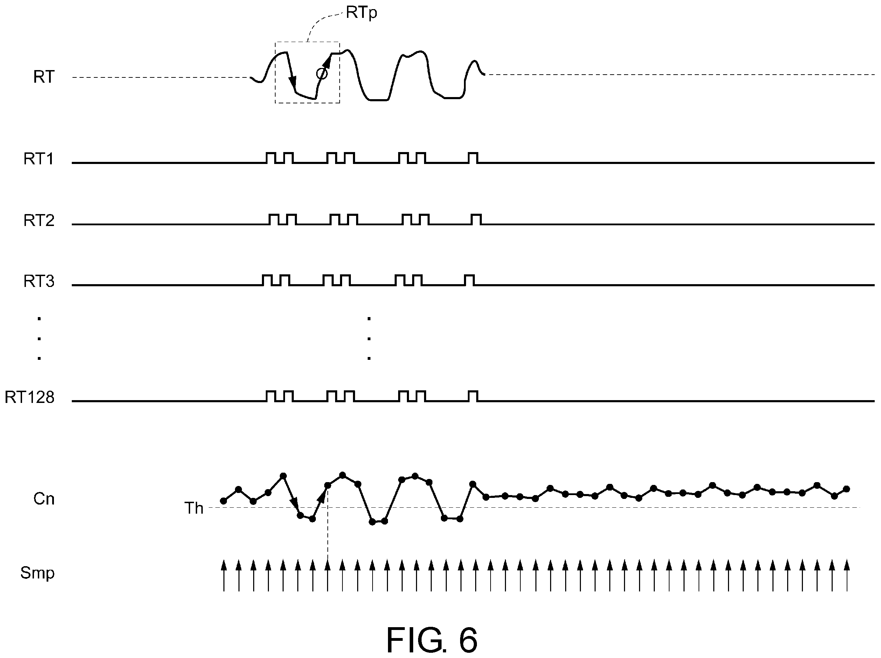

Next, with reference to FIG. 6, an example of an operation of the counter measurement unit according to the embodiment will be described. FIG. 6 is a timing graph illustrating an operation of the rough measurement of the counter measurement unit 32 illustrated in FIG. 1.

As illustrated in FIG. 6, the binarized signal incorporation unit 321 incorporates the binarized signal RT on the basis of a timing of the start signal Str. The binarized signal RT corresponds to the waveform illustrated in FIG. 5. The binarized signal RT is binarized, and binarized signals RT1, RT2, ···, and RT128 (hereinafter, collectively referred to as the "binarized signal RT) is incorporated sequentially to the binarized signal incorporation unit 321 according to the timing of the start signal Str. The counter integration signal Cn represents the binarized signals RT accumulated in the signal accumulation unit 322 and corresponds to the waveform illustrated in FIG. 5.

The stop signal determination unit 323 outputs the sampling signal Smp based on the clock signal to the signal accumulation unit 322 that accumulates the counter integration signals Cn. The stop signal determination unit 323 confirms a rising point of the counter integration signal Cn, which first intersects with the determination threshold value Th, as a measurement point, and the stop signal determination unit outputs a stop signal Stp at the rising point. The determination threshold value Th is variably set depending on n times of measurement cycles of the binarized signals RT, such as 128 times in the example illustrated in FIG. 6. The determination threshold value Th is preferably set to a half of n times of measurement cycles of the binarized signals RT; however, the determination threshold value may not be set to a half thereof. When the target object TA is disposed at a long distance from the sensor device 100, or when the target object TA has a low reflectance, the determination threshold value Th is set to a value larger than a half of n times of measurement cycles of the binarized signals RT. Hence, more sensitive detection of a characteristic point of the binarized signal RT represented by the counter integration signal Cn can be performed.

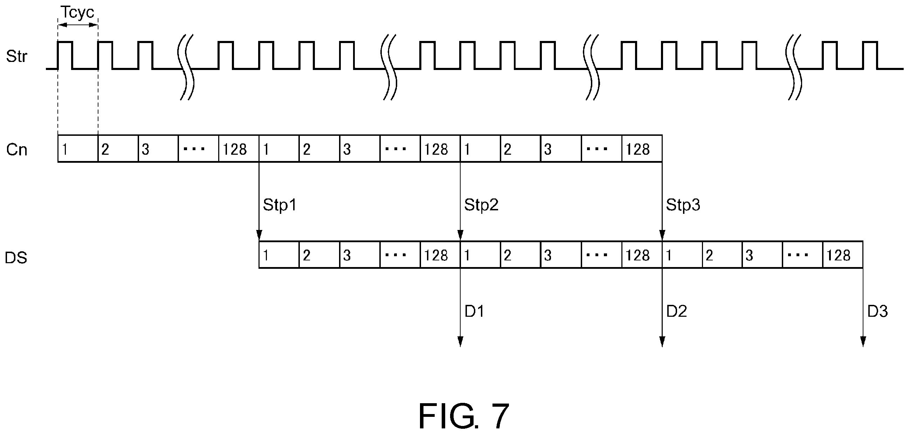

Next, with reference to FIG. 7, an example of an operation of the TDC delay line measurement unit and a periphery thereof according to the embodiment will be described. FIG. 7 is a timing graph illustrating an overview of an operation of the TDC delay line measurement unit 33 and the periphery thereof illustrated in FIG. 1. Moreover, FIG. 7 illustrates an operation performed in a case where the number of times of counter measurement in the counter measurement unit 32 is equal to the number of times of integration in the TDC delay line measurement unit 33 (128 times in FIG. 7; however, changeable). In addition, in order to shorten a response time in the counter measurement unit 32 or the TDC delay line measurement unit 33, it is also possible to reduce one of the numbers of times and perform measurement. When the number of times of the counter measurement is not equal to the number of times of the integration, a waiting time is set in the counter measurement or the delay line measurement, and thus measurement efficiency can be reduced.

As illustrated in FIG. 7, the start signal Str corresponding to the clock signal Ck which is supplied to all of the components of the FPGA 30 from the PLL 47 has a cycle Tcyc, for example. In the counter integration signal Cn of the counter measurement unit 32, the binarized signals RT are incorporated and integrated 128 times on the basis of the timing of the start signal Str. The stop signal determination unit 323 confirms a rising point in integrated value of the binarized signals RT which first intersects with the determination threshold value Th every 128 times of the clock cycles, as a measurement point, and the stop signal determination unit outputs the stop signals Stp1, Stp2, Stp3, and Stp4 simultaneously to the TDC delay lines 301, 302, 303, and 304, respectively.

In a delay signal group DS in the TDC delay line measurement unit 33, the delay line output signal D1j is output in synchronization with the stop signal Stp1 in the first TDC delay line 301. The buffer 315 synchronizes with the next stop signal Stp2 to output the delay line output signal D1 obtained by integrating the delay line output signal D1j 128 times, and a delay line output signal D2j is input from the second TDC delay line 302. The buffer 315 synchronizes with the next stop signal Stp3 to output the delay line output signal D2 obtained by integrating the delay line output signal D2j 128 times, and a delay line output signal D3j is input from the third TDC delay line 303. Hereinafter, this is true of the delay line output signals D3 and D4 output from the TDC delay lines 303 and 304, respectively, and thus the description thereof is omitted.

As described above, the TDC delay line measurement is performed on the basis of a stop timing determined by the number of clock cycles, and thereby a time from the start of light projection to a light receiving measurement point can be obtained. As described with reference to FIG. 1, the generated delay line output signals D1, D2, D3, and D4 are integrated in the waveform integration unit 34, and the distance to the target object TA is measured through the stage number calculation unit 37 and the distance conversion unit 38.

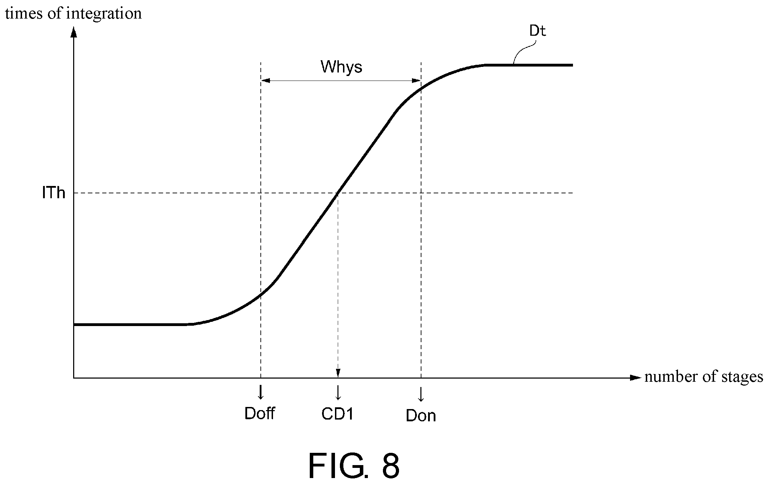

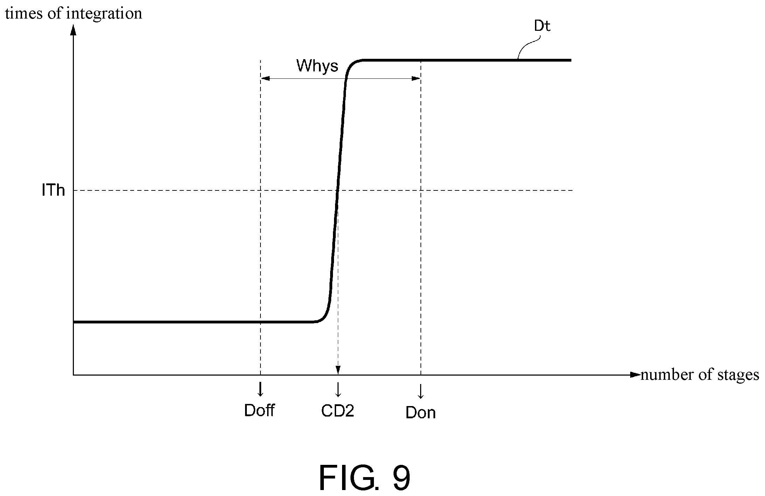

Next, with reference to FIGS. 8 and 9, an example of an operation of the waveform integration unit 34 and a periphery thereof according to the embodiment will be described. FIG. 8 is a waveform graph illustrating a processing result of the waveform integration unit 34 and a periphery thereof illustrated in FIG. 1, when the target object TA has a relatively low reflectance. FIG. 9 is a waveform graph illustrating a processing result of the waveform integration unit 34 and the periphery thereof illustrated in FIG. 1, when the target object has a relatively high reflectance.

The integration signal Dt output by the waveform integration unit 34 is an integration signal of all of the delay line output signals D1 to D4. The integration signal Dt may be subjected to the filtering process, that is, the smoothing with a movement average.

Here, an operation of a virtual sensor device is described with reference to FIGS. 8 and 9. The virtual sensor device has the same configuration as the sensor device 100, and thus the illustration and the description thereof is omitted. In the virtual sensor device, a stage number calculation unit calculates the number of stages of delay elements from an intersection of the integration signal Dt with an integration threshold value ITh. A distance conversion unit converts the number of stages of the delay elements into a distance to a target object. A determination unit compares converted distances CD1 and CD2 to an off-point distance Doff and an on-point distance Don and determines presence or absence of the target object. For example, in a state where the target object is not detected, the determination unit determines that the target object is present (detected) when the converted distances CD1 and CD2 are longer than the on-point distance Don. In addition, in a state where the target object TA is detected, the determination unit determines that the target object is not present (not detected) when the converted distances CD1 and CD2 are shorter than the off-point distance Doff. A width (difference) between the off-point distance Doff and the on-point distance Don is set as a hysteresis width Whys in advance.

As illustrated in FIG. 8, when the target object TA has a low reflectance, the integration signal Dt has a gentle inclination, and the fluctuation (variation) of the converted distance CD1 tends to increase. The hysteresis width Whys of the off-point distance Doff and the on-point distance Don needs to be widely set. On the other hand, as illustrated in FIG. 9, when the target object TA has a high reflectance, the integration signal Dt has a steep inclination, and the fluctuation (variation) of the converted distance CD2 tends to decrease. Therefore, it is desirable that the hysteresis width Whys of the off-point distance Doff and the on-point distance Don be narrow. However, it is inconvenient to set the hysteresis width Whys according to the reflectance of the target object TA, and thus it is particularly difficult to set the hysteresis width at a line in a factory where target objects having different reflectance from each other are mixed. Besides, when the hysteresis width Whys is set depending on the target object TA having the low reflectance, the hysteresis width Whys is wide, as illustrated in FIG. 9, and thus the converted distance CD2 is unlikely to exceed the off-point distance Doff and the on-point distance Don. Therefore, the detection precision of the target object TA is likely to depend on the reflectance of the target object TA.

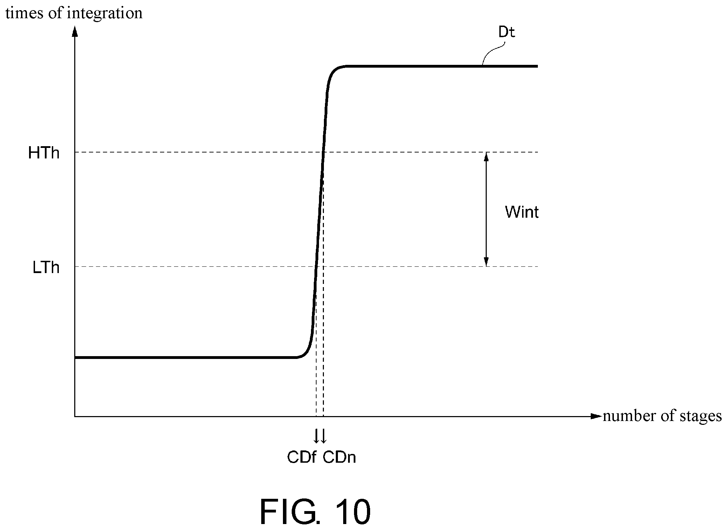

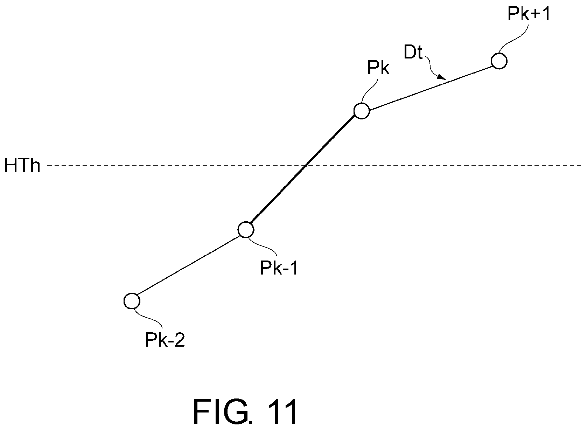

Next, with reference to FIGS. 10 and 11, an example of an operation of the stage number calculation unit and a periphery thereof according to the embodiment will be described. FIG. 10 is a waveform graph illustrating a processing result of the stage number calculation unit 37 and a periphery thereof illustrated in FIG. 1, when the target object TA has the relatively high reflectance. FIG. 11 is a partially enlarged graph illustrating the vicinity of an intersection of the integration signal Dt with a high threshold value HTh illustrated in FIG. 10.

As illustrated in FIG. 10, in the sensor device 100, the high threshold value HTh and a low threshold value LTh are set with respect to an amplitude, that is, the number of times of integration of the integration signal Dt. A width (difference) between the high threshold value HTh and the low threshold value LTh is set by a predetermined value as an integration times width Wint. The stage number calculation unit 37 calculates the number of stages of delay elements from respective intersections of the high threshold value HTh and the low threshold value LTh with the integration signal Dt. The distance conversion unit 38 converts the number of stages of delay elements into a near-side distance value CDn and a far-side distance value CDf. Besides, the determination unit 51 determines presence or absence of the target object TA on the basis of a predetermined distance threshold value and a distance value calculated from the converted near-side distance value CDn and far-side distance value CDf. Here, as illustrated in FIG. 10, when the target object TA has a high reflectance, the integration signal Dt has a steep inclination, and thus a width between the near-side distance value CDn and the far-side distance value CDf is relatively narrow, even when the difference (integration times width Wint) between the high threshold value HTh and the low threshold value LTh is constant. On the other hand, when the target object TA has a low reflectance, the integration signal Dt has a gentle inclination, and thus the width between the near-side distance value CDn and the far-side distance value CDf is relatively wide, even when the difference (integration times width Wint) between the high threshold value HTh and the low threshold value LTh is constant.

In this manner, the high threshold value HTh and the low threshold value LTh are set with respect to the number of times of integration of the integration signal Dt, the number of stages of delay elements from respective intersections of the high threshold value HTh and the low threshold value LTh with the integration signal Dt is calculated, the number of stages of delay elements is converted into the near-side distance value CDn and the far-side distance value CDf, and thereby it is possible to change the width between the near-side distance value CDn and the far-side distance value CDf according to the reflectance. Consequently, the presence or absence of the target object TA is determined on the basis of the predetermined distance threshold value and the distance value calculated from the converted near-side distance value CDn and far-side distance value CDf, and thereby detection of the target object TA can be performed with high precision irrespective of the reflectance of the target object TA.

In the embodiment, an example is described in which the high threshold value HTh and the low threshold value LTh are set with respect to the number of times of integration of the integration signal Dt, the number of stages of delay elements from respective intersections of the high threshold value HTh and the low threshold value LTh with the integration signal Dt is calculated, the number of stages of delay elements is converted into the near-side distance value CDn and the far-side distance value CDf; however, the embodiment is not limited thereto. For example, the counter integration signal Cn may be used instead of the integration signal Dt, and thus the high threshold value and the low threshold value may be set with respect to the number of times of integration of the counter integration signal Cn. In this case, sampling numbers of the sampling signals Smp from the respective intersections of the high threshold value and the low threshold value with the counter integration signal Cn are calculated, and the sampling numbers of the respective sampling signals Smp are converted into the near-side distance value and the far-side distance value.

It is preferable that the respective intersections of the high threshold value HTh and the low threshold value LTh with the integration signal Dt be obtained by sub-pixel processing. In other words, as illustrated in FIG. 11, the integration signal Dt is a collection of discrete points (data) Pk-2, Pk-1, Pk, and Pk+1 from a micro-perspective. The stage number calculation unit 37 performs the sub-pixel processing using data obtained immediately before the intersection of the high threshold value HTh with the integration signal Dt, that is, the point Pk-1 in the example illustrated in FIG. 11, and data obtained immediately behind the intersection of the high threshold value HTh with the integration signal Dt, that is, the point Pk in the example illustrated in FIG. 11, and the stage number calculation unit obtains the intersection of the high threshold value HTh with the integration signal Dt. Besides, the stage number calculation unit 37 calculates the number of stages of delay elements from the obtained intersections. Similarly, the stage number calculation unit 37 also calculates the intersection of the low threshold value LTh with the integration signal Dt and calculates the number of stages of delay elements from the obtained intersection. For example, it is possible to calculate a distance with resolution of one or more stages of delay elements. Consequently, measurement precision of the distance to the periphery of the target object TA can be improved.

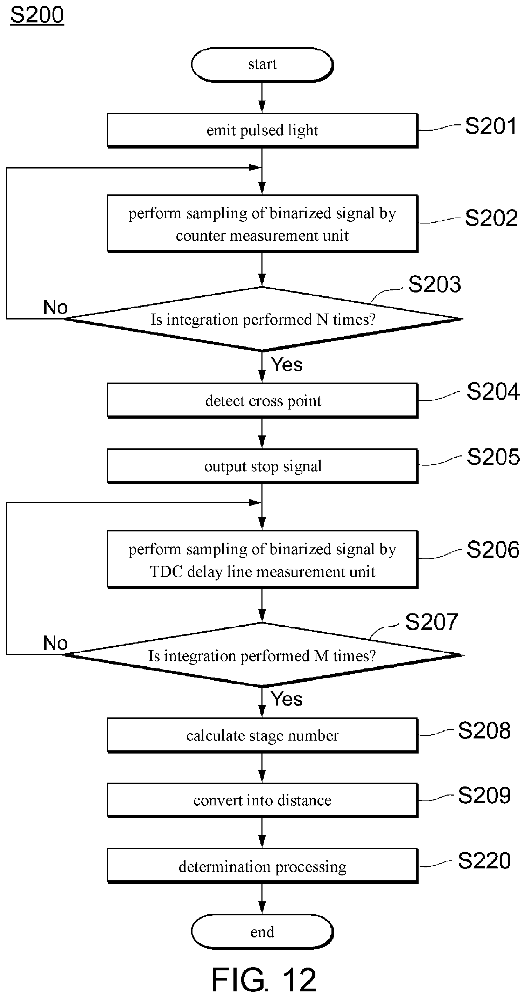

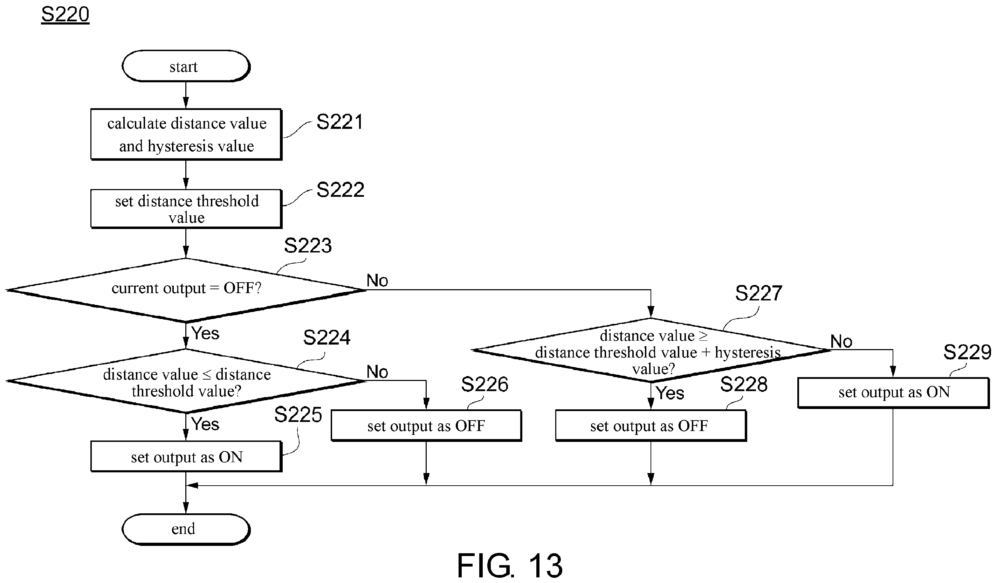

Next, with reference to FIGS. 12 and 13, an example of an operation of the sensor device according to the embodiment will be described. FIG. 12 is a flowchart illustrating a schematic operation of the sensor device 100 according to the embodiment. FIG. 13 is a flowchart illustrating determination processing illustrated in FIG. 12. Hereinafter, a case where the counter measurement in the counter measurement unit 32 is equal to the number of times of integration in the TDC delay line measurement unit 33 will be described.

For example, when the sensor device 100 is supplied with power supply and is started, the sensor device executes detection processing S200 illustrated in FIG. 12. Hereinafter, a case where the counter measurement in the counter measurement unit 32 is equal to the number of times of integration in the TDC delay line measurement unit 33 will be described.

First, the light projecting element 11 emits pulsed light toward the target object TA (S201). Next, the counter measurement unit 32 performs sampling of the binarized information of the binarized signals RT (S202). Next, the counter measurement unit 32 determines whether or not the sampling is integrated N times (S203). As a result of determination in Step S203, when the sampling is not integrated N times, the process returns to Step S202, and the counter measurement unit 32 repeats the sampling of the binarized signal RT until the sampling is integrated N times.

As a result of the determination in Step S203, when the sampling is integrated N times, the counter measurement unit 32 detects a cross point at which the counter integration signal Cn intersects with the determination threshold value Th (S204). Next, the counter measurement unit 32 confirms a measurement point on the basis of the cross point and outputs a stop signal at that time point (S205). Next, the TDC delay line measurement unit 33 performs sampling of the binarized information of the binarized signals RT (S206). Next, the TDC delay line measurement unit 33 determines whether or not the sampling is integrated M times (S207). As a result of determination in Step S207, when the sampling is not integrated M times, the process returns to Step S206, and the TDC delay line measurement unit 33 repeats the sampling of the binarized signal RT until the sampling is integrated M times.

Next, the stage number calculation unit 37 calculates the number of stages of delay elements from the respective intersections of the high threshold value HTh and the low threshold value LTh with the integration signal Dt (S208). Next, the distance conversion unit 38 converts the number of stages of delay elements into the near-side distance value CDn and the far-side distance value CDf (S209). Next, the determination unit 51 executes the following determination processing S220. After end of the determination processing S220, the sensor device 100 ends the detection processing S200.

### <Determination Processing S220>

when the determination processing S220 is started, the determination unit 51 first calculates a distance value CDa and a hysteresis value Vhys on the basis of the near-side distance value CDn and the far-side distance value CDf which are input from the distance conversion unit 38 through the interface unit 41 of the FPGA 30, as illustrated in FIG. 13 (S221).

The distance value CDa is an average value of the near-side distance value CDn and the far-side distance value CDf and is expressed as Expression (2) below.$Distance Value CDa = \left(Near-Side Distance Value CDn+Far-Side Distance Value CDf\right) / 2$ Expression (2)

In the embodiment, an example in which the distance value CDa is the average value of the near-side distance value CDn and the far-side distance value CDf is described; however, the embodiment is not limited thereto. The distance value CDa may be a value calculated from the near-side distance value CDn and the far-side distance value CDf or may be a value other than the average value.

The hysteresis value Vhys is expressed as in Expression (3) below by using a magnification adjustment value Vm and an offset adjustment value Vo stored in a memory or the like of the controller 50 in advance. 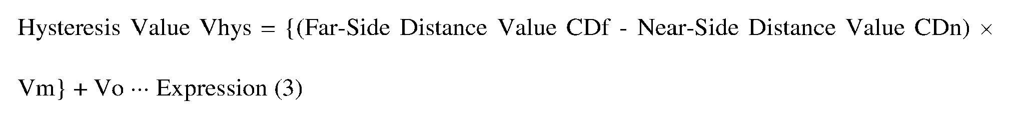 Hysteresis Value Vhys = {(Far-Side Distance Value CDf - Near-Side Distance Value CDn) × Vm} + Vo Expression (3)

Moreover, the magnification adjustment value Vm and the offset adjustment value Vo are not limited to a case where a value stored in advance is used. For example, the magnification adjustment value Vm and the offset adjustment value Vo may be changeable depending on an operation of the operation unit 70 by a user.

Next, the determination unit 51 sets a value input by a user operation of the operation unit 70, as a distance threshold value (S222).

Next, the determination unit 51 determines whether or not a current output is OFF (S223). A case where output is OFF means that the target object TA is not present, and a case where output is ON means that the target object is present. The current output indicates a value, that is, ON or OFF, set as a result of the previous determination processing S220, except for a case of the first execution of the determination processing S220. In case the determination processing S220 is first executed, OFF is set to a default value of output.

As a result of determination in Step S223, when a current output is OFF, the determination unit 51 compares the distance value CDa calculated in Step S221 to the distance threshold value set in Step S222 and determines whether or not the distance value CDa is equal to or smaller than the distance threshold value (S224). As a result of determination in Step S224, when the distance value CDa is equal to or smaller than the distance threshold value, the determination unit 51 sets the output as ON (S225). On the other hand, as a result of determination in Step S224, when the distance value CDa is not equal to or smaller than the distance threshold value, that is, when the distance value CDa is larger than the distance threshold value, the determination unit 51 sets the output as OFF (S226).

As a result of determination in Step S223, when the current output is not OFF, that is, when the current output is ON, determination that the target object is present (target object is detected) is performed as a result of the previous determination processing S220. Hence, the determination unit 51 compares the distance value CDa to a sum (total) of the distance threshold value and the hysteresis value Vhys and determines whether or not the distance value CDa is equal to or larger than the sum (total) of the distance threshold value and the hysteresis value Vhys (S227). In this manner, when the previous determination result indicates the presence of the target object, the presence or absence of the target object is determined on the basis of the hysteresis value Vhys based on an absolute value of a difference between the near-side distance value CDn and the far-side distance value CDf, the distance value CDa calculated from the near-side distance value CDn and the far-side distance value CDf, and the predetermined distance threshold value, for example, the distance value CDa is compared to a sum of the predetermined distance threshold value and the hysteresis value, and thereby it is possible to have a width (margin) in determination by the hysteresis value Vhys, and it is possible to inhibit too sensitive reaction to a change in distance value CDa calculated from the near-side distance value CDn and the far-side distance value CDf, in determination performed after the determination of the presence of the target object.

As a result of the determination in Step S227, when the distance value CDa is equal to or larger than the sum of the distance threshold value and the hysteresis value Vhys, the determination unit 51 sets the output as OFF (S228). On the other hand, as a result of the determination in Step S227, when the distance value CDa is not equal to or larger than the sum of the distance threshold value and the hysteresis value Vhys, that is, when the distance value CDa is smaller than the sum of the distance threshold value and the hysteresis value Vhys, the determination unit 51 sets the output as ON (S229).

After Step S225, Step S227, Step S228, or Step S229, the determination unit 51 ends the determination processing S220.

Moreover, FIG. 13 illustrates an example in which the determination unit 51 calculates the distance value CDa and the hysteresis value Vhys in Step S221; however, the embodiment is not limited thereto. For example, the distance conversion unit 38 of the FPGA 30 may calculate the distance value CDa and the hysteresis value Vhys, and the values may be input to the determination unit 51 via the interface unit 41. In addition, in each determination in Step S224 and Step S227, whether or not to include a case of equal values may be changeable by setting.

In the embodiment, a case where light is used as a measurement medium of the sensor device 100 is described as an example; however, the invention is not limited thereto. For example, the measurement medium of the sensor device 100 may be an electromagnetic wave, a sound wave, or the like. When the electromagnetic wave or the sound wave is used, it is possible to measure not only a distance of the target object TA but also a change in distance to the target object.

In addition, in the embodiment, an example in which the sensor device 100 performs both the rough measurement and the fine measurement is described; however, the embodiment is not limited thereto. For example, the sensor device may be configured to perform only one of the rough measurement and the fine measurement.

As described above, the exemplary embodiments of the present invention are described. According to the sensor device 100 and the detection method according to an embodiment of the present invention, the near-side distance value CDn and the far-side distance value CDf from the respective intersections of the high threshold value HTh and the low threshold value LTh with the integration signal Dt are calculated, and the presence or absence of the target object TA is determined on the basis of a predetermined distance threshold value and the distance value CDa calculated from the near-side distance value CDn and the far-side distance value CDf. Here, as illustrated in FIG. 10, when the target object TA has the high reflectance, the integration signal Dt has a steep inclination, and thus a width between the near-side distance value CDn and the far-side distance value CDf is relatively narrow, even when a difference (integration times width Wint) between the high threshold value HTh and the low threshold value LTh is constant. On the other hand, when the target object TA has the low reflectance, the integration signal Dt has a gentle inclination, and thus a width between the near-side distance value CDn and the far-side distance value CDf is relatively wide, even when the difference (integration times width Wint) between the high threshold value HTh and the low threshold value LTh is constant. Hence, the high threshold value HTh and the low threshold value LTh are set with respect to the number of times of integration of the integration signal Dt, the number of stages of delay elements from the respective intersections of the high threshold value HTh and the low threshold value LTh with the integration signal Dt is calculated, and the number of stages of delay elements is converted into the near-side distance value CDn and the far-side distance value CDf, and thereby it is possible to change the width between the near-side distance value CDn and the far-side distance value CDf according to the reflectance. Consequently, the presence or absence of the target object TA is determined on the basis of the predetermined distance threshold value and the distance value CDa calculated from the converted near-side distance value CDn and far-side distance value CDf, and thereby the detection of the target object TA can be performed with high precision irrespective of the reflectance of the target object TA.

The embodiments described above are provided to achieve an easy understanding of the present invention and are not provided to limit an understanding of the present invention. All of the elements included in the embodiment, arrangement, a material, a condition, a shape, a size, or the like of the elements are not limited to the exemplified example and can be appropriately modified. In addition, configurations included in different embodiments from each other can be partially replaced with each other or can be combined together.

### [Reference Signs List]

- 6: delay element
- 7: flip-flop circuit
- 10: light emitting unit
- 11: light projecting element
- 15: light projecting circuit
- 20: light receiving unit
- 21: light receiving element
- 25: light receiving circuit
- 30: FPGA
- 31: light projecting oscillator
- 32: counter measurement unit
- 33: TDC delay line measurement unit
- 34: waveform integration unit
- 35: inclination integration unit 35
- 37: stage number calculation unit
- 38: distance conversion unit
- 39: register
- 40: light projecting element temperature control unit
- 41: interface unit
- 45: CLK
- 46: clock generation unit
- 47: PLL
- 50: controller
- 51: determination unit
- 60: display unit
- 70: operation unit
- 100: sensor device
- 315: buffer
- 321: binarized signal incorporation unit
- 322: signal accumulation unit
- 323: stop signal determination unit
- 324: stop timing management unit
- CDa: distance value
- CDf: far-side distance value
- CDn: near-side distance value
- Ck: clock signal
- Cn: counter integration signal
- D1, D2, D3, D4: delay line output signal
- D1j, D2j, D3j, D4j: delay line output signal
- DL: delay line measurement
- Doff: off-point distance
- Don: on-point distance
- DS: delay signal group
- Dt: integration signal
- HTh: high threshold value
- LTh: low threshold value
- M1: measurement section
- Mt: constant period
- PP1: projection pulse
- Pt: pulse width
- RT: binarized signal
- RTp: partial waveform
- S200: detection processing
- S220: determination processing
- Smp: sampling signal
- St: start signal
- Stp, Stp1, Stp2, Stp3, Stp4, StpN: stop signal
- Str: start signal
- T1: measurement signal
- T2: setting data
- TA: target object
- Tcyc: cycle
- Vhys: hysteresis value
- Whys: hysteresis width
- Wint: integration times width

## Claims

1. A sensor device (100) comprising:
a light emitting unit (10), configured to transmit a transmission signal toward a target object (TA);
a light receiving unit (20), configured to receive a reflected signal of the transmission signal and generates a binarized signal (RT);
a rough measurement unit (32), configured to:
perform sampling of the binarized signal (RT) at a predetermined cycle (Tcyc) to generate first waveform data;
integrate the first waveform data for a plurality of times of transmission of the transmission signal to generate a counter integration signal (Cn);
a timing determination unit (32), configured to:
determine a reference timing based on a position of a characteristic point appearing on the counter integration signal (Cn) due to a presence of the target object (TA) and
generate a stop signal (Stp, Stpl, Stp2, Stp3, Stp4, StpN) on a basis of the reference timing;
a fine measurement unit (33), comprising a delay circuit unit (301, 302, 303, 304), wherein the delay circuit unit (301, 302, 303, 304) comprises a plurality of delay elements (6) connected to each other in series and the fine measurement unit (33) is configured to:
generate second waveform data (D1j, D2j, D3j, D4j) by causing each of the delay elements (6) to hold each value of the binarized signal (RT) at a respective time and combine the hold values of the binarized signal (RT) for a time length equivalent to a total delay time of the delay elements (6) in response to the stop signal (Stp, Stp1, Stp2, Stp3, Stp4, StpN); and
generate second integrated waveform data (D1, D2, D3, D4) by integrating the second waveform data a plurality of times at the predetermined cycle (Tcyc)
a waveform integration unit (34), configured to:
generate an integration signal (Dt) by integrating the second integrated waveform data (D1, D2, D3, D4);
a distance calculation unit (37, 38), configured to:
calculate a first distance value (CDn) and a second distance value (CDf) from respective intersections of a first integration threshold value (HTh) and a second integration threshold value (LTh) with the integration signal (Dt), wherein the first integration threshold value and the second integration threshold value are set with respect to an amplitude, that is, the number of times of integration of the integration signal (Dt), and wherein a width, that is a difference, between the first integration threshold value and the second integration threshold value is set by a predetermined value as an integration times width (Wint),
wherein a respective number of stages of the delay elements is calculated from respective intersections of the first integration threshold value and the second integration threshold value with the integration signal (Dt), and
wherein the respective number of stages of the delay elements is converted into the first distance value and the second distance value, wherein a distance value (CDa) and a hysteresis value (Vhys) are calculated from the first distance value and the second distance value;
a determination unit (51), configured to:
determine presence or absence of the target object (TA) on a basis whether or not the distance value is equal to or larger than a sum of a predetermined distance threshold value and the hysteresis value.

2. The sensor device (100) according to claim 1,
wherein the determination unit (51) is configured to:
determine presence or absence of the target object (TA) when a previous determination result indicates the presence of the target object (TA).

3. The sensor device (100) according to claim 1 or 2,
wherein the distance calculation unit (37, 38) is configured to:
calculate the first distance value (CDn) and the second distance value (CDf) by performing sub-pixel processing using data obtained immediately in front of and immediately behind the respective intersections of the first integration threshold value (HTh) and the second integration threshold value (LTh) with the integration signal (Dt).

4. The sensor device (100) according to claim 1, wherein the fine measurement unit (33) comprises a plurality of the delay circuit units (301, 302, 303, 304) connected to each other in parallel and integrates the second integrated waveform data (D1, D2, D3, D4) generated by each of the delay circuit units (301, 302, 303, 304).

5. The sensor device (100) according to claim 4, wherein
the rough measurement unit (32) has a nanosecond-order resolution, and
the fine measurement unit (33) has a picosecond-order resolution.

6. A detection method for detecting a target object (TA) comprising:
a signal transmission step of transmitting a transmission signal toward the target object (TA);
a signal reception step of receiving a reflected signal of the transmission signal and generating a binarized signal (RT);
a first integration step, comprising:
sampling the binarized signal (RT) at a predetermined cycle (Tcyc) to generate first waveform data; and
integrating the first waveform data for a plurality of times of transmission of the transmission signal to generate a counter integration signal (Cn),
a timing determination step, comprising:
determining a reference timing based on a position of a characteristic point appearing on the counter integration signal (Cn) due to a presence of the target object (TA); and
generating a stop signal (Stp, Stp1, Stp2, Stp3, Stp4, StpN) on a basis of the reference timing, and
a second integration step, comprising:
generating, in a delay circuit unit (301, 302, 303, 304) comprising a plurality of delay elements (6) connected to each other in series, second waveform data (D1j, D2j, D3j, D4j) by causing each of the delay elements (6) to hold each value of the binarized signal (RT) at a respective time and combine the hold values of the binarized signal (RT) for a time length equivalent to a total delay time of the delay elements in response to the stop signal (Stp, Stp1, Stp2, Stp3, Stp4, StpN) and
generating second integrated waveform data (D1, D2, D3, D4) by integrating the second waveform data a plurality of times at the predetermined cycle (Tcyc), and
a distance calculation step, comprising:
calculating a first distance value (CDn) and a second distance value (CDf) from respective intersections of a first integration threshold value (HTh) and a second integration threshold value (LTh) with the integration signal (Dt), wherein the first integration threshold value and the second integration threshold value are set with respect to an amplitude, that is, the number of times of integration of the integration signal (Dt), and wherein a width, that is a difference, between the first integration threshold value and the second integration threshold value is set by a predetermined value as an integration times width (Wint),
wherein a respective number of stages of the delay elements is calculated from respective intersections of the first integration threshold value and the second integration threshold value with the integration signal (Dt), and
wherein the respective number of stages of the delay elements is converted into the first distance value and the second distance value, wherein a distance value (CDa) and a hysteresis value (Vhys) are calculated from the first distance value and the second distance value; a determination step comprising:
determining presence or absence of the target object (TA) on a basis whether or not the distance value is equal to or larger than a sum of a predetermined distance threshold value and the hysteresis value.

7. The detection method according to claim 6,
wherein the determination step comprises determining presence or absence of the target object (TA) when a previous determination result indicates the presence of the target object (TA).

8. The detection method according to claim 6 or 7,
wherein the distance calculation step comprises calculating the first distance value (CDn) and the second distance value (CDf) by performing sub-pixel processing using data obtained immediately in front of and immediately behind the respective intersections of the first integration threshold value (HTh) and the second integration threshold value (LTh) with the integration signal (Dt).

9. The detection method according to claim 6,
wherein the second integration step comprises integrating, in a plurality of the delay circuit units (301, 302, 303, 304) connected to each other in parallel, the second integrated waveform data (D1, D2, D3, D4) generated by each of the delay circuit units (301, 302, 303, 304).

10. The detection method according to claim 9, wherein
the first integration step is executed with a nanosecond-order resolution, and
the delay circuit unit (301, 302, 303, 304) has a picosecond-order resolution.

## Patentansprüche

1. Sensorvorrichtung (100), umfassend:
eine Lichtemissionseinheit (10), die dazu eingerichtet ist, ein Sendesignal in Richtung eines Zielobjekts (TA) zu senden;
eine Lichtempfangseinheit (20), die dazu eingerichtet ist, ein reflektiertes Signal des Sendesignals zu empfangen und ein binarisiertes Signal (RT) zu erzeugen;
eine Grobmesseinheit (32), die dazu eingerichtet ist:
eine Abtastung des binarisierten Signals (RT) in einem vorgegebenen Zyklus (Tcyc) durchzuführen, um erste Wellenformdaten zu erzeugen;
die ersten Wellenformdaten für eine Vielzahl von Sendevorgängen des Sendesignals zu integrieren, um ein Zählintegrationssignal (Cn) zu erzeugen;
eine Zeitbestimmungseinheit (32), die dazu eingerichtet ist:
einen Referenzzeitpunkt auf der Grundlage einer Position eines charakteristischen Punktes zu bestimmen, der aufgrund eines Vorhandenseins des Zielobjekts (TA) in dem Zählintegrationssignal (Cn) auftritt, und
auf der Grundlage des Referenzzeitpunkts ein Stoppsignal (Stp, Stp1, Stp2, Stp3, Stp4, StpN) zu erzeugen;
eine Feinmesseinheit (33), die eine Verzögerungsschaltungseinheit (301, 302, 303, 304) umfasst, wobei die Verzögerungsschaltungseinheit (301, 302, 303, 304) eine Vielzahl von Verzögerungselementen (6) umfasst, die in Reihe miteinander verbunden sind, und die Feinmesseinheit (33) dazu eingerichtet ist:
zweite Wellenformdaten (D1j, D2j, D3j, D4j) zu erzeugen, indem jedes der Verzögerungselemente (6) veranlasst wird, jeden Wert des binarisierten Signals (RT) zu einer jeweiligen Zeit zu halten, und die gehaltenen Werte des binarisierten Signals (RT) für eine Zeitdauer zu kombinieren, die einer Gesamtverzögerungszeit der Verzögerungselemente (6) entspricht, als Reaktion auf das Stoppsignal (Stp, Stp1, Stp2, Stp3, Stp4, StpN); und
zweite integrierte Wellenformdaten (D1, D2, D3, D4) durch mehrmaliges Integrieren der zweiten Wellenformdaten mit dem vorgegebenen Zyklus (Tcyc) zu erzeugen;
eine Wellenform-Integrationseinheit (34), die dazu eingerichtet ist:
ein Integrationssignal (Dt) durch Integrieren der zweiten integrierten Wellenformdaten (D1, D2, D3, D4) zu erzeugen;
eine Abstandsberechnungseinheit (37, 38), die dazu eingerichtet ist:
einen ersten Abstandswert (CDn) und einen zweiten Abstandswert (CDf) aus jeweiligen Schnittpunkten eines ersten Integrationsschwellenwerts (HTh) und eines zweiten Integrationsschwellenwerts (LTh) mit dem Integrationssignal (Dt) zu berechnen, wobei der erste Integrationsschwellenwert und der zweite Integrationsschwellenwert in Bezug auf eine Amplitude, d. h. die Anzahl der Integrationsvorgänge des Integrationssignals (Dt), festgelegt werden, und
wobei eine Breite, d. h. eine Differenz, zwischen dem ersten Integrationsschwellenwert und dem zweiten Integrationsschwellenwert durch einen vorgegebenen Wert als eine Integrationsanzahlbreite (Wint) festgelegt wird,
wobei eine jeweilige Anzahl von Stufen der Verzögerungselemente aus jeweiligen Schnittpunkten des ersten Integrationsschwellenwerts und des zweiten Integrationsschwellenwerts mit dem Integrationssignal (Dt) berechnet wird, und
wobei die jeweilige Anzahl von Stufen der Verzögerungselemente in den ersten Abstandswert und den zweiten Abstandswert umgewandelt wird, wobei ein Abstandswert (CDa) und ein Hysteresewert (Vhys) aus dem ersten Abstandswert und dem zweiten Abstandswert berechnet werden;
eine Bestimmungseinheit (51), die dazu eingerichtet ist:
das Vorhandensein oder Fehlen des Zielobjekts (TA) auf der Grundlage zu bestimmen, ob der Abstandswert gleich oder größer als eine Summe aus einem vorgegebenen Abstandsschwellenwert und dem Hysteresewert ist oder nicht.

2. Sensorvorrichtung (100) nach Anspruch 1,
wobei die Bestimmungseinheit (51) dazu eingerichtet ist:
das Vorhandensein oder Fehlen des Zielobjekts (TA) zu bestimmen, wenn ein vorheriges Bestimmungsergebnis das Vorhandensein des Zielobjekts (TA) anzeigt.

3. Sensorvorrichtung (100) nach Anspruch 1 oder 2,
wobei die Abstandsberechnungseinheit (37, 38) dazu eingerichtet ist:
den ersten Abstandswert (CDn) und den zweiten Abstandswert (CDf) zu berechnen, indem eine Subpixel-Verarbeitung unter Verwendung von Daten durchgeführt wird, die unmittelbar vor und unmittelbar hinter den jeweiligen Schnittpunkten des ersten Integrationsschwellenwerts (HTh) und des zweiten Integrationsschwellenwerts (LTh) mit dem Integrationssignal (Dt) erhalten wurden.

4. Sensorvorrichtung (100) nach Anspruch 1,
wobei die Feinmesseinheit (33) eine Vielzahl der Verzögerungsschaltungseinheiten (301, 302, 303, 304) umfasst, die parallel miteinander verbunden sind, und die von jeder der Verzögerungsschaltungseinheiten (301, 302, 303, 304) erzeugten zweiten integrierten Wellenformdaten (D1, D2, D3, D4) integriert.

5. Sensorvorrichtung (100) nach Anspruch 4, wobei
die Grobmesseinheit (32) eine Auflösung im Nanosekundenbereich aufweist und die Feinmesseinheit (33) eine Auflösung im Pikosekundenbereich aufweist.

6. Erfassungsverfahren zum Erfassen eines Zielobjekts (TA), umfassend:
einen Signalsendeschritt zum Senden eines Sendesignals in Richtung des Zielobjekts (TA);
einen Signalempfangsschritt zum Empfangen eines reflektierten Signals des Sendesignals und zum Erzeugen eines binarisierten Signals (RT);
einen ersten Integrationsschritt, umfassend:
Abtasten des binarisierten Signals (RT) mit einem vorgegebenen Zyklus (Tcyc), um erste Wellenformdaten zu erzeugen; und
Integrieren der ersten Wellenformdaten für eine Vielzahl von Sendevorgängen des Sendesignals, um ein Zählintegrationssignal (Cn) zu erzeugen,
einen Zeitbestimmungsschritt, umfassend:
Bestimmen eines Referenzzeitpunkts auf der Grundlage einer Position eines charakteristischen Punktes, der aufgrund des Vorhandenseins des Zielobjekts (TA) in dem Zählintegrationssignal (Cn) auftritt; und
Erzeugung eines Stoppsignals (Stp, Stp1, Stp2, Stp3, Stp4, StpN) auf der Grundlage des Referenzzeitpunkts, und
einen zweiten Integrationsschritt, umfassend:
Erzeugen von zweiten Wellenformdaten (D1j, D2j, D3j, D4j) in einer Verzögerungsschaltungseinheit (301, 302, 303, 304), die eine Vielzahl von Verzögerungselementen (6) umfasst, die in Reihe miteinander verbunden sind, indem jedes der Verzögerungselemente (6) veranlasst wird, jeden Wert des binarisierten Signals (RT) zu einer jeweiligen Zeit zu halten und die gehaltenen Werte des binarisierten Signals (RT) für eine Zeitdauer zu kombinieren, die einer Gesamtverzögerungszeit der Verzögerungselemente entspricht, als Reaktion auf das Stoppsignal (Stp, Stp1, Stp2, Stp3, Stp4, StpN), und
Erzeugen zweiter integrierter Wellenformdaten (D1, D2, D3, D4) durch mehrmaliges Integrieren der zweiten Wellenformdaten mit dem vorgegebenen Zyklus (Tcyc), und
einen Abstandsberechnungsschritt, umfassend:
Berechnen eines ersten Abstandswerts (CDn) und eines zweiten Abstandswerts (CDf) aus jeweiligen Schnittpunkten eines ersten Integrationsschwellenwerts (HTh) und eines zweiten Integrationsschwellenwerts (LTh) mit dem Integrationssignal (Dt), wobei der erste Integrationsschwellenwert und der zweite Integrationsschwellenwert in Bezug auf eine Amplitude, d. h. die Anzahl der Integrationsvorgänge des Integrationssignals (Dt), festgelegt werden, und
wobei eine Breite, d. h. eine Differenz, zwischen dem ersten Integrationsschwellenwert und dem zweiten Integrationsschwellenwert durch einen vorgegebenen Wert als eine Integrationsanzahlbreite (Wint) festgelegt wird,
wobei eine jeweilige Anzahl von Stufen der Verzögerungselemente aus jeweiligen Schnittpunkten des ersten Integrationsschwellenwerts und des zweiten Integrationsschwellenwerts mit dem Integrationssignal (Dt) berechnet wird, und
wobei die jeweilige Anzahl von Stufen der Verzögerungselemente in den ersten Abstandswert und den zweiten Abstandswert umgewandelt wird, wobei ein Abstandswert (CDa) und ein Hysteresewert (Vhys) aus dem ersten Abstandswert und dem zweiten Abstandswert berechnet werden;
ein Bestimmungsschritt, umfassend:
Bestimmen des Vorhandenseins oder Fehlens des Zielobjekts (TA) auf der Grundlage, ob der Abstandswert gleich oder größer als eine Summe aus einem vorgegebenen Abstandsschwellenwert und dem Hysteresewert ist oder nicht.

7. Erfassungsverfahren nach Anspruch 6,
wobei der Bestimmungsschritt Bestimmen des Vorhandenseins oder des Fehlens des Zielobjekts (TA) umfasst, wenn ein vorheriges Bestimmungsergebnis das Vorhandensein des Zielobjekts (TA) anzeigt.

8. Erfassungsverfahren nach Anspruch 6 oder 7,
wobei der Abstandsberechnungsschritt Berechnen des ersten Abstandswerts (CDn) und des zweiten Abstandswerts (CDf) umfasst, indem eine Subpixel-Verarbeitung unter Verwendung von Daten durchgeführt wird, die unmittelbar vor und unmittelbar hinter den jeweiligen Schnittpunkten des ersten Integrationsschwellenwerts (HTh) und des zweiten Integrationsschwellenwerts (LTh) mit dem Integrationssignal (Dt) erhalten wurden.

9. Erfassungsverfahren nach Anspruch 6,
wobei der zweite Integrationsschritt das Integrieren, in einer Vielzahl der Verzögerungsschaltungseinheiten (301, 302, 303, 304), die parallel miteinander verbunden sind, der zweiten integrierten Wellenformdaten (D1, D2, D3, D4), die von jeder der Verzögerungsschaltungseinheiten (301, 302, 303, 304) erzeugt werden, umfasst.

10. Erfassungsverfahren nach Anspruch 9, wobei
der erste Integrationsschritt mit einer Auflösung im Nanosekundenbereich durchgeführt wird, und
die Verzögerungsschaltungseinheit (301, 302, 303, 304) eine Auflösung im Pikosekundenbereich aufweist.

## Revendications

1. Dispositif capteur (100) comprenant :
une unité d'émission de lumière (10), configurée pour émettre un signal d'émission vers un objet cible (TA) ;
une unité de réception de lumière (20), configurée pour :
recevoir un signal réfléchi du signal d'émission et pour générer un signal binarisé (RT) ;
une unité de mesure approximative (32), configurée pour effectuer un échantillonnage du signal binarisé (RT) selon un cycle prédéterminé (Tcyc) afin de générer des premières données de forme d'onde ;intégrer les premières données de forme d'onde pendant une pluralité de cycles d'émission du signal d'émission afin de générer un signal d'intégration cumulatif (Cn) ;
une unité de détermination de synchronisation (32), configurée pour :
déterminer une synchronisation de référence sur la base d'une position d'un point caractéristique apparaissant sur le signal d'intégration cumulatif (Cn) en raison de la présence de l'objet cible (TA) et générer un signal d'arrêt (Stp, Stp1, Stp2, Stp3, Stp4, StpN) sur la base de la synchronisation de référence ;une unité de mesure fine (33), comprenant une unité de circuits à retard (301, 302, 303, 304),dans laquelle l'unité de circuits à retard (301, 302, 303, 304) comprend une pluralité d'éléments à retard (6) connectés les uns aux autres en série, et l'unité de mesure fine (33) est configurée pour :
générer des deuxièmes données de forme d'onde (D1j, D2j, D3j, D4j) en amenant chacun des éléments à retard(6) à maintenir chaque valeur du signal binarisé (RT) à un instant respectif et de combiner les valeurs maintenues du signal binarisé (RT) pendant une durée équivalente au temps à retard total des éléments à retard (6) en réponse au signal d'arrêt (Stp, Stp1, Stp2, Stp3, Stp4, StpN) ; et générer des deuxièmes données de forme d'onde intégrées (D1, D2, D3, D4) en intégrant les deuxièmes données de forme d'onde plusieurs fois selon le cycle prédéterminé (Tcyc) une unité d'intégration de forme d'onde (34), configurée pour :générer un signal d'intégration (Dt) en intégrant les deuxièmes données de forme d'onde intégrées(D1, D2, D3, D4) ;
une unité de calcul de distance (37, 38), configurée pour :
calculer une première valeur de distance (CDn) et une deuxième valeur de distance (CDf) à partir des intersections respectives d'une première valeur seuil d'intégration (HTh) et d'une deuxième valeur seuil d'intégration(LTh) avec le signal d'intégration (Dt),
dans laquelle la première valeur de seuil d'intégration et la deuxième valeur de seuil d'intégration sont définies par rapport à une amplitude, c'est-à-dire le nombre de fois où le signal d'intégration (Dt) est intégré, et dans laquelle une largeur, c'est-à-dire une différence, entre la première valeur de seuil d'intégration et la deuxième valeur de seuil d'intégration est définie par une valeur prédéterminée en tant que largeur de temps d'intégration (Wint),
dans lequel un nombre respectif d'étages des éléments à retard est calculé à partir des intersections respectives de la première valeur seuil d'intégration et de la deuxième valeur seuil d'intégration avec le signal d'intégration (Dt), et
dans lequel le nombre respectif d'étages des éléments à retard est converti en une première valeur de distance et une deuxième valeur de distance, une valeur de distance (CDa) et une valeur d'hystérésis (Vhys) étant calculées à partir de la première valeur de distance et de la deuxième valeur de distance ;une unité de détermination (51), configurée pour :
déterminer la présence ou l'absence de l'objet cible (TA) en fonction du fait que la valeur de distance soit égale ou supérieure à une somme d'une valeur seuil de distance prédéterminée et de la valeur d'hystérésis.

2. Dispositif capteur (100) selon la revendication 1, dans lequel l'unité de détermination (51) est configurée pour :
déterminer la présence ou l'absence de l'objet cible (TA) lorsqu'un résultat de détermination précédent indique la présence de l'objet cible (TA).

3. Dispositif capteur (100) selon la revendication 1 ou 2,
dans lequel l'unité de calcul de distance (37, 38) est configurée pour :
calculer la première valeur de distance (CDn) et la deuxième valeur de distance (CDf) en effectuant un traitement sous-pixel à partir des données obtenues immédiatement en avant et immédiatement en arrière des points d'intersection respectifs de la première valeur seuil d'intégration (HTh) et de la deuxième valeur seuil d'intégration (LTh) avec le signal d'intégration (Dt).

4. Dispositif capteur (100) selon la revendication 1,
dans lequel l'unité de mesure fine (33) comprend une pluralité d'unités de circuits à retard (301, 302, 303, 304) connectées entre elles en parallèle et intègre les deuxièmes données de forme d'onde intégrées (D1, D2, D3, D4) générées par chacune desdites unités de circuits à retard (301, 302, 303, 304).

5. Dispositif capteur (100) selon la revendication 4,
dans lequel l'unité de mesure grossière (32)présente une résolution de l'ordre de la nanoseconde, et l'unité de mesure fine (33) présente une résolution de l'ordre de la picoseconde.

6. Procédé de détection d'un objet cible (TA), comprenant :
une étape de transmission de signal consistant à transmettre un signal d'émission vers l'objet cible (TA) ;
une étape de réception de signal consistant à recevoir un signal réfléchi du signal d'émission et à générer un signal binarisé (RT) ;une première étape d'intégration, comprenant :
l'échantillonnage du signal binarisé (RT) à un cycle prédéterminé (Tcyc) pour générer des premières données de forme d'onde ; et l'intégration des premières données de forme d'onde pendant un nombre de fois correspondant aux transmissions du signal d'émission afin de générer un signal d'intégration cumulatif (Cn),une étape de détermination de synchronisation comprenant :la détermination d'une synchronisation de référence sur la base d'une position d'un point caractéristique apparaissant sur le signal d'intégration cumulatif (Cn) en raison de la présence de l'objet cible (TA) ; et la génération d'un signal d'arrêt (Stp, Stp1, Stp2, Stp3, Stp4, StpN) sur la base de la synchronisation de référence, et une deuxième étape d'intégration, comprenant :
la génération, dans une unité de circuit à retard (301, 302, 303, 304) comprenant une pluralité d'éléments à retard (6) connectés les uns aux autres en série, de deuxièmes données de forme d'onde (D1j, D2j, D3j, D4j) en amenant chacun des éléments à retard (6) à maintenir chaque valeur du signal binarisé (RT) à un instant respectif et à combiner les valeurs maintenues du signal binarisé (RT) pendant une durée équivalente au temps à retard total des éléments à retard en réponse au signal d'arrêt (Stp, Stp1, Stp2, Stp3, Stp4, StpN) et générer des deuxièmes données de forme d'onde intégrées (D1, D2, D3, D4) en intégrant les deuxièmes données de forme d'onde plusieurs fois selon le cycle prédéterminé (Tcyc), et une étape de calcul de distance, comprenant :
le calcul d'une première valeur de distance (CDn) et d'une deuxième valeur de distance (CDf) à partir des intersections respectives d'une première valeur seuil d'intégration (HTh) et d'une deuxième valeur seuil d'intégration (LTh) avec le signal d'intégration (Dt), dans lequel la première valeur de seuil d'intégration et la deuxième valeur de seuil d'intégration sont définies par rapport à une amplitude, c'est-à-dire le nombre d'intégrations du signal d'intégration (Dt), et dans laquelle une largeur, c'est-à-dire une différence, entre la première valeur seuil d'intégration et la deuxième valeur seuil d'intégration est définie par une valeur prédéterminée en tant que largeur de temps d'intégration (Wint), dans laquelle un nombre respectif d'étages d'éléments à retard est calculé à partir des intersections respectives de la première valeur seuil d'intégration et de la deuxième valeur seuil d'intégration avec le signal d'intégration (Dt), et dans lequel le nombre respectif d'étages des éléments à retard est converti en une première valeur de distance et en une deuxième valeur de distance, une valeur de distance (CDa) et une valeur d'hystérésis (Vhys) étant calculées à partir de la première valeur de distance et de la deuxième valeur de distance ;
une étape de détermination comprenant :la détermination de la présence ou de l'absence de l'objet cible (TA) en fonction du fait que la valeur de distance soit égale ou supérieure à la somme d'une valeur seuil de distance prédéterminée et de la valeur d'hystérésis.

7. Procédé de détection selon la revendication 6, dans lequel l'étape de détermination comprend la détermination de la présence ou de l'absence de l'objet cible (TA), lorsqu'un résultat de détermination précédent indique la présence de l'objet cible (TA).

8. Procédé de détection selon la revendication 6 ou 7, dans lequel l'étape de calcul de distance comprend le calcul de la première valeur de distance (CDn) et de la deuxième valeur de distance (CDf) en effectuant un traitement sous-pixel à l'aide de données obtenues immédiatement en avant et immédiatement en arrière des intersections respectives de la première valeur seuil d'intégration (HTh) et de la deuxième valeur seuil d'intégration (LTh) avec le signal d'intégration (Dt).

9. Procédé de détection selon la revendication 6, dans lequel l'étape de deuxième intégration comprend l'intégration, dans une pluralité d'unités de circuits à retard (301, 302, 303, 304) connectées entre elles en parallèle, des données de forme d'onde intégrées de deuxième type (D1, D2, D3, D4) générées par chacune des unités de circuits à retard (301, 302, 303, 304).

10. Procédé de détection selon la revendication 9, dans lequel la première étape d'intégration est exécutée avec une résolution de l'ordre de la nanoseconde, et l'unité de circuit à retard (301, 302, 303, 304) présente une résolution de l'ordre de la picoseconde.
